(19) Europäisches Patentamt
European Patent Office
Office européen des brevets

(11) **EP 3 006 189 B1**

## (12) EUROPEAN PATENT SPECIFICATION

(45) Date of publication and mention
of the grant of the patent:
**03.06.2020 Bulletin 2020/23**

(21) Application number: **15189048.0**

(22) Date of filing: **09.10.2015**

(51) Int Cl.:
**B29C 65/48** *(2006.01)*    **B64C 3/28** *(2006.01)*
**B29C 70/88** *(2006.01)*    **B64C 3/20** *(2006.01)*
**B64C 3/26** *(2006.01)*    **B64D 15/02** *(2006.01)*
**B64D 15/12** *(2006.01)*    **B29L 31/30** *(2006.01)*

(54) **COMPOSITE STRUCTURES HAVING COMPOSITE-TO-METAL JOINTS AND METHODS FOR MAKING THE SAME**

VERBUNDSTOFFSTRUKTUREN MIT VERBUNDSTOFF-METALL-VERBINDUNGEN UND VERFAHREN ZUR HERSTELLUNG DAVON

STRUCTURES COMPOSITES À JOINTS COMPOSITE ET MÉTAL ET LEURS PROCÉDÉS DE FABRICATION

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **09.10.2014 US 201414510736**

(43) Date of publication of application:
**13.04.2016 Bulletin 2016/15**

(73) Proprietor: **The Boeing Company
Chicago, IL 60606-1596 (US)**

(72) Inventors:
• **Georgeson, Gary Ernest
Chicago, IL Illinois 60606 (US)**
• **Griess, Kenneth Harlan
Chicago, IL Illinois 60606 (US)**

(74) Representative: **Witte, Weller & Partner
Patentanwälte mbB
Postfach 10 54 62
70047 Stuttgart (DE)**

(56) References cited:
**EP-A2- 2 650 120     WO-A1-2005/087589
GB-A- 724 758**

EP 3 006 189 B1

**Description**

**TECHNICAL FIELD**

This disclosure generally relates to composite structures, especially to fiber reinforced resin laminates, and deals more particularly with a hybrid composite having a composite-to-metal joint.

**BACKGROUND**

A composite metal-fibrous structure fused for aircraft parts is known from GB 724,758. A laminate with heating element is known from WO 2005/087589 A1.

Bonding techniques are often used to assemble composite structures. In applications where the composite structure also requires fasteners, the local thickness or gauge of the structure surrounding the fastener may need to be increased in order to withstand loads transmitted through the fastener joint. As the local thickness of the structure increases, the fastener may need to be lengthened, thereby adding weight to the structure. Additionally, the increased local thickness of the structure may increase the eccentricity of the load path across the fastener joint, which may place undesired bending loads on the fastener.

One solution to the problems mentioned above consists of attaching metal fittings to the composite structure in the area of the fasteners. These metal fittings may be formed of titanium or similar metals that may not substantially chemically react with carbon fiber reinforced composites in which they are in contact. Titanium fittings, however, may be relatively expensive, particularly when it is necessary to form them into complex shapes.

Accordingly, there is a need for a composite resin-to-metal joint that may be used to connect substantially all metal fittings with substantially all composite resin structures, which is relatively inexpensive and easy to manufacture, and which may withstand loads transferred around fastener connection points. There is also a need for a composite resin-to-metal joint that substantially avoids chemical reactions between the all metal fitting and the all composite resin structure.

**SUMMARY**

The disclosed embodiments provide a hybrid-type composite structure that includes a fiber reinforced resin composite-to-metal joint that may be used to connect a substantially all metal fitting with a substantially all composite resin structure. The joint provides a transition between the composite and metallic structures that is suitable for use in higher performance applications, such as aerospace vehicles. This transition from a substantially all composite to a substantially all metal material may reduce or eliminate the possibility of corrosion and/or problems stemming from eccentricity. During layup of the composite structure, sheets of metal are substituted for a number of composite plies, and the transition from composite plies to metal sheets occurs at staggered locations so as to provide adequate load transfer from the composite portion to the metal portion. The staggered transition results in an interleaving between the composite plies and the metal sheets and creates multiple bond lines that may reduce the occurrence and/or propagation of cracks or disbonds in the joint. An adhesive placed between the metal sheets binds and unitizes the sheets into a nearly solid metal fitting.

According to one disclosed embodiment, a composite structure is provided, comprising a laminated stack of fiber reinforced resin plies and a stack of metal sheets. The metal sheets have edges that are interleaved with the edges of the fiber reinforced resin plies to form a composite-to-metal joint connecting the fiber reinforced resin plies with the metal sheets.

According to another embodiment, a hybrid resin-metal structure is provided comprising a composite resin portion, a metal portion, and a transition section between the resin and metal portions. The resin portion includes laminated plies of fiber reinforced resin, and the metal portion includes bonded sheets of metal. The transition section includes staggered overlaps between the laminated plies and the metal sheets.

According to another embodiment, a hybrid composite metal part is provided. The part comprises a layup of fiber reinforced composite material that is terminated at an interface location. At the interface location, a metal ply of the same thickness as the composite material continues to the metal edge of the part, and the layup is repeated with a composite-to-metal interface that is staggered toward the edge of the part from the prior interface location. A ply of structural adhesive is placed between the metal plies, with the next metal-to-composite interface staggered away from the part edge to produce a nested splice, and the staggered interface stacking produces nested tabs and is continued to the full thickness of the part with none of the composite plies extending fully to the edge of the part.

According to still another embodiment, a method is provided of fabricating a composite structure. The method comprises forming a multi-ply composite layup having a composite portion and a metal portion, and forming a composite-to-metal joint between the composite portion and the metal portion. The method further includes compacting and curing the layup.

According to a further embodiment, a method is provided to produce a hybrid metal part. The method comprises laying at least one fiber reinforced composite ply that is terminated at an interface location, and laying an adjacent metal ply where the metal ply is of substantially the same thickness as the adjacent fiber reinforced composite ply. The steps of laying composite plies and adjacent metal plies are repeated to form a composite-to-metal interface that is staggered toward said an edge of the part from the prior interface location. The method further comprises laying a ply of structural adhesive between the metal plies, and repeating the composite and metal ply layup where the next metal-to-composite interface is staggered away from the part edge to produce a nested splice.

## BRIEF DESCRIPTION OF THE ILLUSTRATIONS

**FIG. 1** is an illustration of a sectional view of a composite structure having a composite-to-metal joint.
**FIG. 2** is an illustration of a perspective view of the composite structure including the composite-to-metal joint.
**FIG. 3** is an illustration of a perspective view of the area designated as **FIG. 3** in **FIG. 2.**
**FIG. 4** is an illustration of a cross-sectional view of the joint, better showing interleaving between composite plies and the metal sheets.
**FIG. 5** is an illustration of a cross-sectional view of two separated layers of the joint shown in **FIG. 4,** also showing the application of a film adhesive on the metal sheets.
**FIG. 6** is an illustration of an enlarged, cross-sectional view of a portion of the joint formed by the two layers shown in **FIG. 5.**
**FIG. 7** is an illustration of a broad flow diagram of a method of making a composite structure having the composite joint shown in **FIGS. 2-4.**
**FIG. 8** is an illustration of a flow diagram showing additional details of the method shown in **FIG. 7.**
**FIG. 9** is an illustration of a flow diagram of another method of making a composite structure having the composite joint shown in **FIGS. 2-4.**
**FIG. 10** is an illustration of a flow diagram of aircraft production and service methodology.
**FIG. 11** is an illustration of a block diagram of an aircraft.

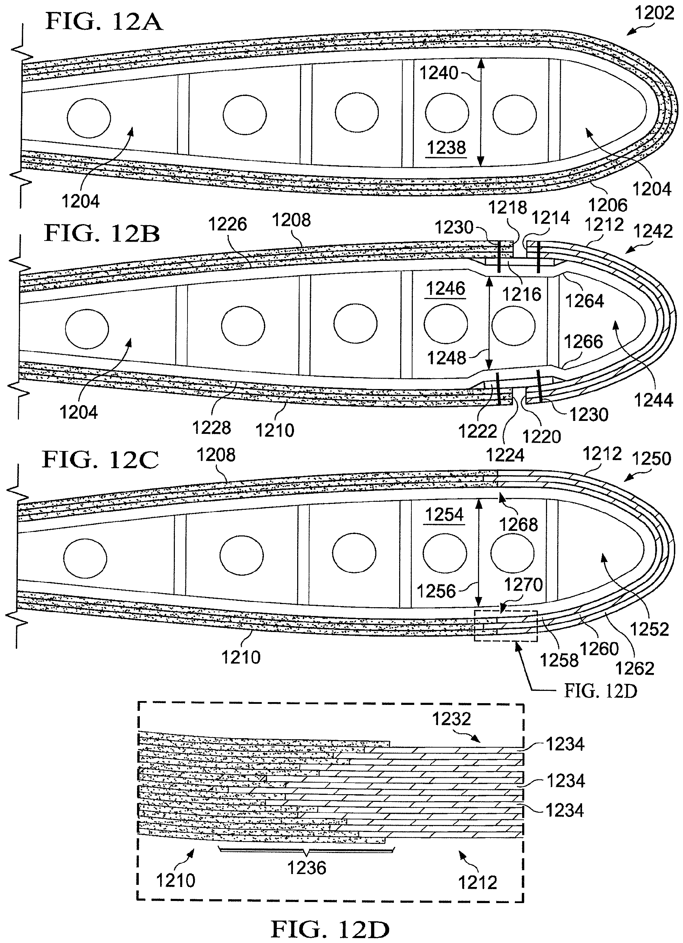

**FIG. 12A** through **FIG. 12D** are illustrative embodiments depicting a cross-sectional side view of a structure formed by a frame and a skin that includes **FIG. 12A, FIG. 12B, FIG. 12C,** and **FIG. 12D. FIG. 12A** is an illustration of a cross-sectional side view of a structure formed by a frame and a composite skin depicted in accordance with an illustrative embodiment; **FIG. 12B** is an illustration of a cross-sectional side view of a structure including: a frame, a composite skin, a metal skin, and a splice plate connecting the metal skin to the composite skin depicted in accordance with an illustrative embodiment; **FIG.12C** is an illustration of a cross-sectional side view of a structure including composite skin connected to a metal skin depicted in accordance with an illustrative embodiment; **FIG. 12D** is an illustration of a zoomed in cross-sectional side view of a connection of the metal skin to the composite skin on the structure depicted in **FIG. 12C** depicted in accordance with an illustrative embodiment.
**FIG. 13A** is an illustration of a cross-sectional side view of a structure similar to the structure depicted in **FIG. 12C,** but with a conductive strip in a stack of metal sheets, depicted in accordance with an illustrative embodiment; **FIG. 13B** is an illustration of a side cross-sectional view of a structure similar to the structure depicted in **FIG. 12C,** but with an integrated heating duct, depicted in accordance with an illustrative embodiment.
**FIG. 14A** is an illustration of a cross-sectional side view of a structure similar to the structure depicted in **FIG. 12C** depicted in accordance with an illustrative embodiment; **FIG. 14B** is an illustration of a cross-sectional side view of an illustrative embodiment of the structure depicted in **FIG. 14A,** but differing from **FIG. 14A** by the stack of metal sheets changing its shape, depicted in accordance with an illustrative embodiment.
**FIG. 15** is an illustration of a cross-sectional side view of an engine with a nozzle containing a memory shape alloy connected to a composite engine turbine section cowl depicted in accordance with an illustrative embodiment.
**FIG. 16** is an illustration of a perspective view of a titanium-composite ply joint connecting an aluminum structure to a composite structure depicted in accordance with an illustrative embodiment.
**FIG. 17A** is an illustration of a perspective cross-section view of a titanium-composite ply joint, from view **17A** in **FIG. 16,** of a stack of metal sheets, incorporating a Griesson disbond limiter, bonded to a composite laminate depicted in accordance with an illustrative embodiment. In **FIG. 17B, FIG. 17A** is modified to show an alternative configuration of the Griesson disbond limiter. In **FIG. 17C, FIG. 17B** is modified to show another alternative configuration of the Griesson disbond limiter.
**FIG. 18** is an illustration of a flowchart of a process for bonding a metal skin to a composite skin without using a splice plate depicted in accordance with an illustrative embodiment.
**FIG. 19** is an illustration of a flowchart of a process for inhibiting galvanic corrosion of an aluminum structure connected, without using a splice plate, to a composite structure depicted in accordance with an illustrative embodiment.

**DETAILED DESCRIPTION**

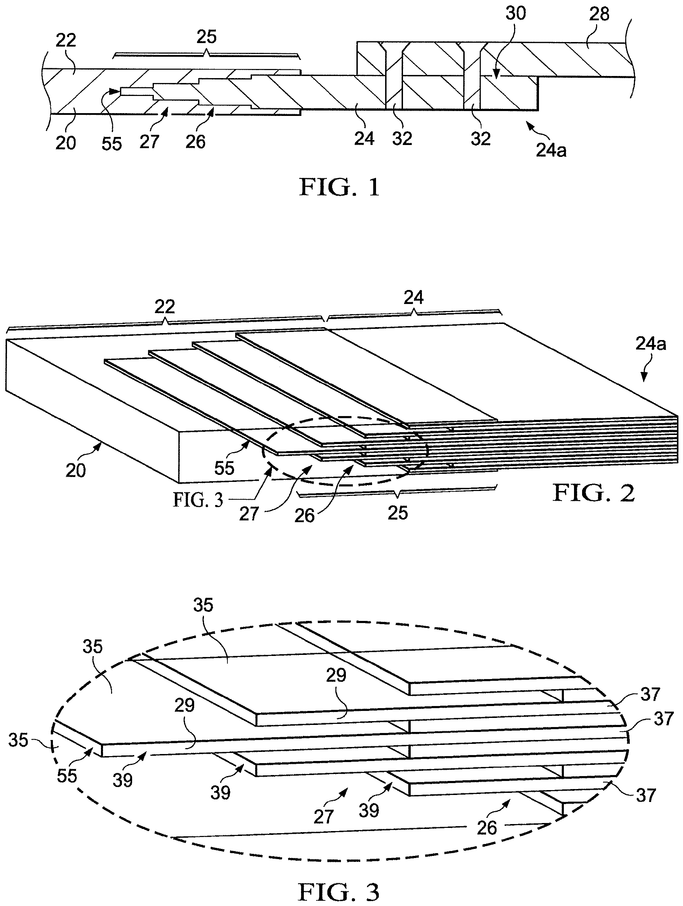

Referring first to **FIG. 1,** hybrid composite structure **20** includes composite resin portion **22** joined to metal portion **24** by transition section **25** that includes composite-to-metal joint **26.** In the illustrated example, composite structure **20** is a substantially flat composite sheet, however, depending upon the application, structure **20** may have one or more curves, contours or other geometric features. For example, composite structure **20** may comprise an inner and/or outer contoured skin of an aircraft (not shown) which is secured to frame **28** portion of the aircraft by means of lap joint **30** and fasteners **32** which pass through skin **20** into frame **28.**

Frame **28** may comprise a composite, a metal or other rigid material, and metal portion **24** of structure **20** may serve as rigid metal fitting **24** that is suited to transfer a range of loads and types of loadings between frame **28** and composite portion **20.** As will be discussed below in more detail, metal portion **24** may comprise any of various metals such as, without limitation, titanium that is substantially non-reactive to and compatible with composite portion **20** and frame **28.** In one practical embodiment, for example, and without limitation, composite resin portion **22** may comprise a carbon fiber reinforced epoxy, metal portion **24** may comprise a titanium alloy, and frame **28** may comprise an aluminum alloy or a composite. Transition section **25** and joint **26** are strong enough to carry the typical range and types of loads between composite resin portion **22** and metal portion **24,** including, but not limited to, tension, bending, torsion, and shear loads. Although the illustrated transition section **25** and joint **26** are formed between an all composite resin portion **22** and the all metal portion 24, it may be possible to employ them to join two differing composite structures (not shown) or two differing metal structures (not shown).

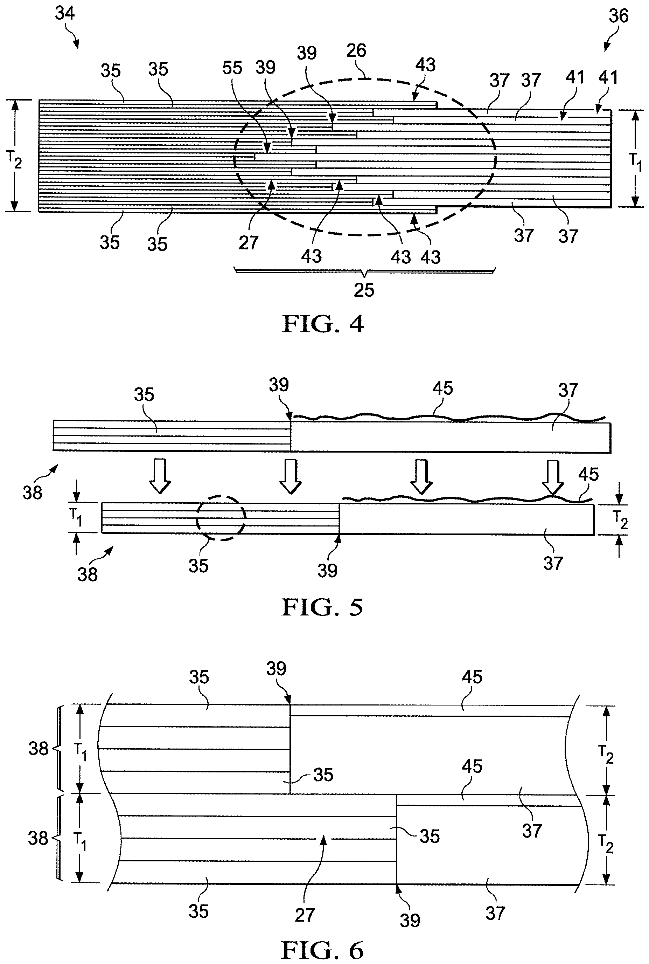

Referring to FIGS. 1-4, a layup of composite material plies 35 is terminated at a interface location 39 referred to later herein as a transition point 39, where a metal sheet or ply 37 of the substantially the same thickness as the composite material plies 35 continues to the metal edge 24a of the metal portion 24, and the layup is repeated with a composite-to-metal interface 39 that is staggered toward the metal edge 24a from the prior interface location 39 and includes a ply of structural metal adhesive 45 (see FIGS. 5 and 6) between the metal plies 37, with the next metal-to-composite interface 39 staggered away from the part edge 24a to produce a nested splice 27. This staggered interface stacking, which produces nested tabs 29 (see FIG. 3), is continued to the full thickness of the hybrid composite structure 20 with none of the composite plies 35 extending fully to the metal edge 24a of the all metal portion 24

Referring now also to FIGS. 2-4, the composite resin portion 22 of the structure 20 comprises a laminated stack 34 of fiber reinforced resin plies 35, and the metal portion 24 of the structure 20 comprises a stack 36 of metal sheets or plies 37 that are bonded together to form a substantially unitized metal structure. As shown in FIGS. 5 and 6, the composite plies 35 and the metal sheets 37 are arranged in layers 38. Each of the layers 38 comprises one or more of the composite plies 35 in substantially edge-to-edge abutment with one of the metal sheets 37. Thus, each of the layers 38 transitions at a point 39 from a composite i.e. composite resin plies 35, to a metal, i.e. metal sheet 37.

The transition points 39 are staggered relative to each other according to a predetermined layup schedule such that the plies 35 and the metal sheets 37 overlap each other in the transition section 25 (FIG. 1). Staggering of the transition points 39 creates multiple bond lines that may reduce the occurrence and/or propagation of cracks or disbonds in the joint 26. The staggering of the transition points 39 also results in a form of interleaving of the composite plies 35 and the metal sheets 37 within the joint 26 which forms a nested splice 27 between the all composite resin portion 22 and the all metal portion 24. This nested splice 27 may also be referred to as a finger bond 26, a finger joint 26 or a multiple step lap joint 26. The adjacent ones of the transition points 39 are spaced from each other in the in-plane direction of the structure 20 so as to achieve a bonded joint 26 that exhibits optimum performance characteristics, including strength and resistance to disbonds and propagation of inconsistencies such as cracks. In the illustrated example, the nested splice 27 forming the joint 26 is a form of a double finger joint 26 in which the transition points 39 are staggered in opposite directions from a generally central point 55 of maximum overlap. However, other joint configurations are possible including but not limited to a single finger joint in which the multiple transition points 39 are staggered in a single direction.

The composite plies 35 may comprise a fiber reinforced resin, such as without limitation, carbon fiber epoxy, which may be in the form of unidirectional prepreg tape or fabric. Other fiber reinforcements are possible, including glass fibers, and the use of non-prepreg materials may be possible. The composite plies 35 may have predetermined fiber orientations and are laid up according to a predefined ply schedule to meet desired performance specifications. As previously mentioned, the bonded sheets 37 may comprise a metal such as titanium that is suitable for the intended application. In the illustrated example, the stack 36 of metal sheets 37 has a total thickness $t_1$ which is generally substantially equal to the thickness $t_2$ of the laminated stack 34 of plies 35. In the illustrated example however, $t_2$ is slightly greater than $t_1$ by a factor of the thickness of several overwrap plies 43 on opposite sides of the stack 34.

FIGS. 5 and 6 illustrate details of two adjoining layers 38 of the joint 26 shown in FIGS. 2-4. In this example, each layer 38 comprises four plies 35 having a collective total thickness $T_1$. The individual metal sheets 37 of the adjacent layers 38 are bonded together by means of a layer of structural adhesive 45, which may comprise a commercial film adhesive or other forms of a suitable adhesive that is placed between the metal sheets 37 during the layup process.

The combined thickness of each metal sheet 37 and one layer of adhesive 45 represented as $T_2$ in FIG. 5 is substantially equal to the thickness $T_1$ of the composite plies 35 in the layer 38. Although not shown in the Figures, a thin film of adhesive may be placed between the plies 35 to increase the interlaminar bond strength. In one practical embodiment, titanium alloy metal sheets 37 may be used which each have a thickness of approximately 0.635 mm (0.025 inches) the film adhesive 45 may be approximately 0.127 mm (0.005 inches) thick, and four composite carbon fiber epoxy plies 35 may be used in each layer 38 having a collective total thickness of about 0.762 mm (0.030 inches). Depending on the application, the use of metals other than titanium may be possible. The distance between adjacent transition points 39, and thus the length of the overlap between the layers 38, as well as the thickness and number of composite plies 35 and the thickness of the metal sheets 37 will depend on the requirements of the particular application, including the type and magnitude of the loads that are to be transmitted through the joint 26, and possibly other performance specifications.

The differing layers 38 of the joint 26 between the two differing materials of the composite and metal portions 22, 24 respectively (FIG. 1), render the structure 20 well suited to nondestructive evaluations of bond quality using embedded or mounted sensors (not shown). Ultrasonic structural waves (not shown) may be introduced into the structure 20 at the edge of the metal portion 24, at the composite portion 22 or in the transition section 25. These ultrasonic waves travel through what amounts to a waveguide formed by the metal 37 sheets and the interfaces (not shown) between the composite plies 35 and the metal sheets 37. MEMS-based (microelectromechanical) sensors, thin piezoelectric sensors (not shown) or other transducers placed in the structure 20 may be used to receive the ultrasonic structural waves for purposes on analyzing the condition of the bondlines in the joint 26.

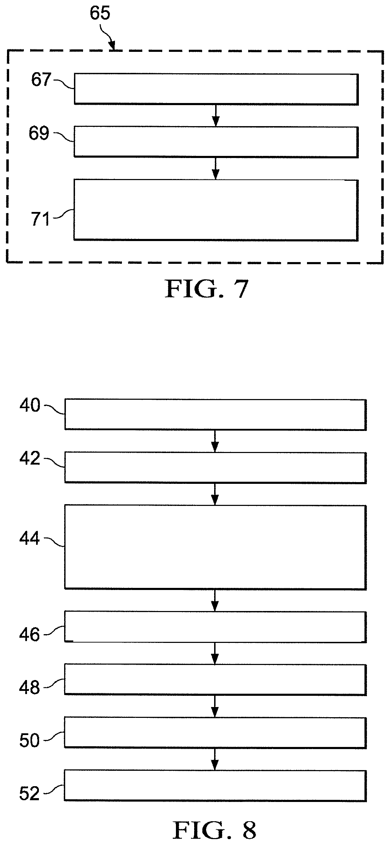

Referring now to FIG. 7, one method of making the composite structure 20 comprises forming a multi-layer composite layup as shown at 65. Forming the layup includes laying up a composite resin portion 22 at step 67, and laying up a metal portion 24 at 69. The step 65 of forming the layup further includes forming a composite-to-metal joint between the composite resin portion and the metal portion of the layup, shown at 71.

FIG. 8 illustrates additional details of the method shown in FIG. 7. Beginning at step 40, individual metal sheets 37 are trimmed to a desired size and/or shape. Next at 42, the surfaces of the metal sheets 37 are prepared by suitable processes that may include cleaning the metal sheets 37 with a solvent, drying them, etc. then at 44, the layup is assembled by laying up the metal sheets 37 and the composite plies 35 in a sequence that is determined by a predefined ply schedule (not shown) which includes a predetermined staggering of the transition points 39 between the plies 35 and the metal sheet 37 in each layer 38.

During the layup process, the metal sheets 37 are sequenced like plies into the layup, much like composite plies are sequenced into a layup in a conventional layup process. As shown at step 46, adhesive may be introduced between the metal sheets 37 in order to bond them together into a unitized metal structure. Similarly, although not shown in FIG. 8, a bonding adhesive may be introduced between the individual composite plies 35 in order to increase the bond strength between these plies 35. Next, at 48, the layup may be compacted using any of several known compaction techniques, such as vacuum bagging following which the layup is cured at step 50 using autoclave or out-of-autoclave curing processes. At step 52, the cured composite structure 20 may be trimmed and/or inspected, as necessary.

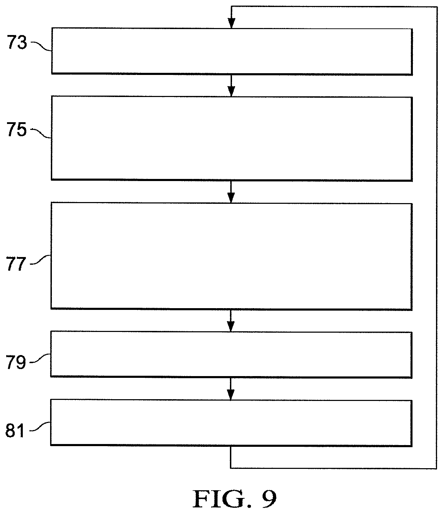

FIG. 9 illustrates still another embodiment of a method of making a hybrid composite part 20. The method begins at step 73 with laying at least one composite ply 35 that is terminated at an interface location 39 on a suitable layup tool (not shown). At 75, an adjacent metal ply 37 is laid up which is substantially the same thickness as the adjacent composite ply 35. As shown at 77, the layup process is repeated with a composite-to-metal interface 39 that is staggered toward the metal edge 24a of the part 20 from the prior interface location 39. At 79, a ply of structural adhesive 45 is laid between the metal plies 37. Steps 73-79 are repeated successively to produce a nested splice 27 and a staggered interface stacking forming nested tabs 29 to the full thickness of the hybrid part 20, with none composite plies 35 extending fully to the metal edge 24a of the part 20. Although not shown in FIG. 9, the completed layup is vacuum bagged processed to remove voids, and is subsequently cured using any suitable curing method.

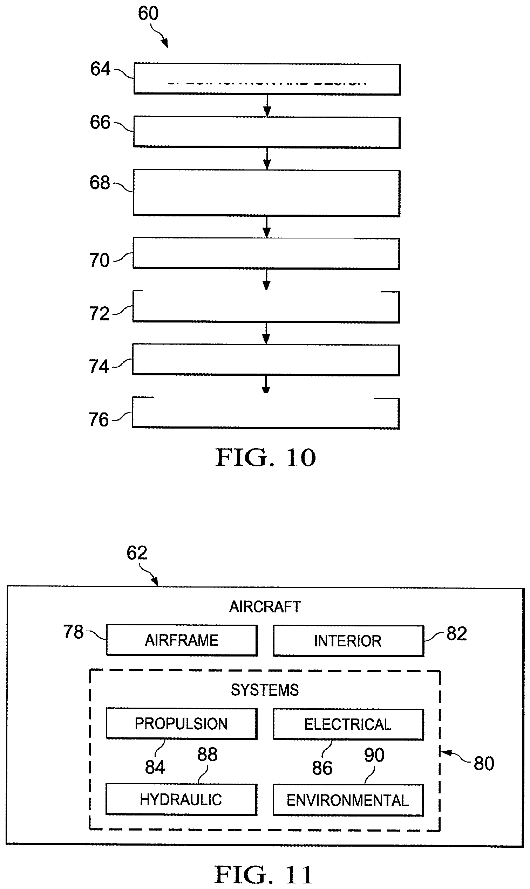

Embodiments of the disclosure may find use in a variety of potential applications, particularly in the transportation industry, including for example, aerospace, marine and automotive applications. Thus, referring now to FIGS. 10 and 11, embodiments of the disclosure may be used in the context of an aircraft manufacturing and service method 60 as shown in FIG. 10 and an aircraft 62 as shown in FIG. 11. Aircraft applications of the disclosed embodiments may include, for example, a wide variety of structural composite parts and components, especially those requiring the use of fasteners during the assembly process. During pre-production, exemplary method 60 may include specification and design 64 of the aircraft 62 and material procurement 66. During production, component and subassembly manufacturing 68 and system integration 70 of the aircraft 62 takes place. Thereafter, the aircraft 62 may go through certification and delivery 72 in order to be placed in service 74. While in service by a customer, the aircraft 62 is scheduled for routine maintenance and service 76 (which may also include modification, reconfiguration, refurbishment, and so on).

Each of the processes of method 60 may be performed or carried out by a system integrator, a third party, and/or an operator (e.g., a customer). For the purposes of this description, a system integrator may include without limitation any number of aircraft manufacturers and major-system subcontractors; a third party may include without limitation any number of vendors, subcontractors, and suppliers; and an operator may be an airline, leasing company, military entity, service organization, and so on.

As shown in FIG. 11, the aircraft 62 produced by exemplary method 60 may include an airframe 78 with a plurality of systems 80 and an interior 82. Examples of high-level systems 82 include one or more of a propulsion system 84, an electrical system 86, a hydraulic system 88, and an environmental system 90. Any number of other systems may be included. The disclosed method may be employed to fabricate parts, structures and components used in the airframe 78 or in the interior 82. Although an aerospace example is shown, the principles of the disclosure may be applied to other industries, such as the marine and automotive industries.

Systems and methods embodied herein may be employed during any one or more of the stages of the production and service method 60. For example, parts, structures and components corresponding to production process 68 may be fabricated or manufactured in a manner similar to parts, structures and components produced while the aircraft 62 is in service. Also, one or more apparatus embodiments, method embodiments, or a combination thereof may be utilized during the production stages 68 and 70, for example, by substantially expediting assembly of or reducing the cost of an aircraft 62. Similarly, one or more of apparatus embodiments, method embodiments, or a combination thereof may be utilized while the aircraft 62 is in service, for example and without limitation, to maintenance and service 76.

Thus, described above may be illustrative embodiments for a composite structure. The embodiments may include a laminated stack of fiber reinforced resin plies; and a stack of metal sheets that may include edges interleaved with edges of the fiber reinforced resin plies and may form a composite-to-metal joint connecting the fiber reinforced resin plies with the metal sheets.

The embodiments of the composite structure may further include the stacks of fiber reinforced resin plies and metal sheets being arranged in layers, wherein each of the layers may include a metal sheet and at least one of the fiber reinforced resin plies. The thickness of the fiber reinforced resin plies in each of the layers may be generally equal to the thickness of the metal sheet in the layer.

Additionally, the composite structure may include the fiber reinforced resin plies and the metal sheet in each of the layers being configured with substantially abutting edges forming a resin-to-metal transition point. The transition points of the layers may be staggered relative to each other.

Further, the embodiment of the composite structure may be configured such that the layers form a fiber reinforced resin-to-composite finger joint between the stack of resin plies and the stack of metal sheets. A layer of adhesive may be between adjacent ones of the metal sheet for bonding the sheets together. The metal sheets may be a titanium alloy. The fiber reinforcement of the plies may include carbon.

Illustrative embodiments above may also show a hybrid composite resin-metal structure, which may include a composite resin portion including laminated plies of fiber reinforced resin; a metal portion including bonded sheets of metal; and a transition section between the composite resin portion and the metal portion, the transition section including staggered overlaps between the laminated plies and the metal sheets. The illustrative embodiments may include the hybrid composite resin-metal structure such that the laminated plies and the metal sheets may be arranged in layers, and each of the layers may include one of the metal sheets and a plurality of the fiber reinforced resin plies in substantially edge-to-edge abutment.

Illustrative embodiments of the hybrid composite resin-metal structure above may also include the thickness of the plies in each of the layers being substantially equal to the thickness of the metal sheet in the layer. The staggered overlaps may form a composite-to-metal finger joint between the composite resin portion and the metal portion. The hybrid composite resin-metal structure may also include a layer of adhesive between each of the metal sheets configured to bond the sheets together and unitizing the metal portion. Each of the metal sheets may be a titanium alloy.

Illustrative embodiments above also presented a hybrid composite metal part, that may include a layup of fiber reinforced composite material that may be terminated at an interface location, where a metal ply of the same thickness as the composite material may continue to the metal edge of the part, and the layup may be repeated with a composite-to-metal interface that may be staggered toward the edge of the part from the prior interface location and may include a ply of structural adhesive between the metal plies. The next metal-to-composite interface may be staggered away from the part edge and may produce a nested splice. The staggered interface stacking may produce nested tabs and may continue to the full thickness of the part with none of the composite plies extending fully to the edge of the part.

Illustrative embodiments above also presented a method of fabricating a composite structure, the method may include: forming a multi-layer composite layup having a fiber reinforced composite resin portion and a metal portion, including forming a composite-to-metal joint between the composite resin portion and the metal portion of the layup. Forming the layup may include forming each of the layers by placing at least one fiber reinforced composite resin ply and one metal sheet in substantially edge-to-edge abutment with each other to form a transition point between the fiber reinforced composite resin and the metal in the layer.

Illustrative embodiments of the method may also include forming the layup to include staggering the transition points in the layers relative to each other. Unitizing the metal portion may include placing a layer of adhesive between the metal sheets.

Illustrative embodiments above also presented a method to produce a hybrid metal part that may include laying at least one fiber reinforced composite ply that may be terminated at a interface location; laying an adjacent metal ply where the metal ply may be of the same thickness as the adjacent fiber reinforced composite ply; repeating the steps of laying composite plies and adjacent metal plies to form a composite-to-metal interface that is staggered toward said an edge of the part from the prior interface location; laying a ply of structural adhesive between the metal plies; and repeating the composite and metal ply layup where the next metal-to-composite interface may be staggered away from the part edge to produce a nested splice. The method may also include continuing the staggered interface stacking of the composite and metal plies to produces nested tabs to the full thickness of the part with none of composite plies extending fully to the edge of the part. The method may further include vacuum bag processing the part to remove air voids in the layup; and curing the laid up part.

Illustrative embodiments above also presented a hybrid composite resin-metal aircraft structure that may include: a plurality of laminated layers forming a fiber reinforced, all composite portion, an all metal portion and a hybrid composite-metal finger joint connecting the composite portion with the metal portion. Each of the layers may include a plurality of plies of composite resin and a titanium metal sheet, wherein the plies and the metal sheet may be arranged in edge-to-edge abutment with each other forming a composite-to-metal transition point in the layer, and wherein the transition points in the layers may be staggered relative to each other to form the finger joint.

Illustrative embodiments of the hybrid composite resin-metal aircraft structure above may also include a layer of adhesive between the metal sheets for unitizing the metal sheets. The thickness of the plies in each of the layers may be substantially equal to a combined thickness of one of the sheets and layer of the adhesive.

Illustrative embodiments above also presented a method of making a hybrid composite resin-metal aircraft structure. The method of the illustrative embodiments may include: forming a layup including a fiber reinforced, all composite portion, an all metal portion and a hybrid composite-metal finger joint connecting the composite portion with the metal portion. Forming the layup including laying up a plurality of layers wherein each of the layers may be formed by placing a plurality of composite resin plies in edge-to-edge abutment with a titanium metal sheet forming a composite-to-metal transition point in the layer; placing a layer of adhesive between the metal sheets to unitize the metal portion; forming the joint between the composite portion and the metal portion by staggering the transition points in the layers relative to each other; compacting the layup; and curing the layup.

The illustrative embodiments recognize and take into account that an ability to remove and replace damaged components may increase a functionality and/or a value of a product containing components. While metallic designs may favor bolting to join components to a structure, idealized composite designs may tend to favor bonding. The illustrative embodiments recognize and take into account that an ability to leverage the advantages of metallic bolted joint characteristics, while gaining the performance advantages of composites in a single joint and/or within a single component may provide advantages of improved strength and/or reduced thickness, and/or reduced weight over joints and/or components containing only metal, only composites, or padding up a gauge of the component and/or joint.

The illustrative embodiments recognize and take into account that a section within a component or a joint between components in a structure that bonding titanium sheets to composite plies in a Ti-Ply material may enables a structure to have the weight and fatigue characteristics of a composite, along with the ability to fasten and/or join similar to components that are fully metallic.

The illustrative embodiments recognize and take into account that traditional composite to metallic joints fail in the joint once the metallic portion of the joint starts to yield. Tensile tests have shown that a joint using Ti-Ply materials and/or methods may survive not only the critical metallic yield point, but that ultimate failure of the components being joined may occur outside the joint completely, in the fully metal portion connected to the joint. The eventual metal failure may result fom a classic neck down behavior and failure, after transioning through both the elastic and plastic zones for the fully metal portion connected to the joint. Thus, multiple metallic sheets bonded to composite plies in a Ti-Ply joint may create multiple load paths, which contribute overall durability of the Ti-Ply joint and its superior performance in strength and/or resilience as compared to a joint or a component section that may be fully composite or fully metalic.

The illustrative embodiments further recognize and take into account that resistance of a metal skin on a structure to dents or failure caused by impact forces from an object impacting the skin may be stronger than resistance of a composite skin on the same structure receiving the same impact force. Thus, while composite skin may be desirable on a structure such as an aircraft wing leading edge or door frame to reduce weight and corrosion risk of the skin, when impact resistance is significant, it may be more desirable to use a metal component at these locations. Thus, for reasons noted above, and others, it may be desirable to replace a composite skin with a metal skin at certain locations on a structure.

The illustrative embodiments recognize and take into account that graphite may act as a cathode while aluminum may act as an anode that may facilitate galvanic corrosion of aluminum connected to graphite, particularly in the presence of an electrolyte solution. Accordingly, a composite material containing a fiber including graphite has been observed to induce galvanic corrosion in a structure including aluminum as a component in contact with the graphite. Composites reinforced with carbon fibers may contain graphite. Accordingly, connecting a component that may contain a carbon fiber element directly to a component that may contain aluminum may be an undesired design.

With reference now to **FIG. 12A** through **FIG. 12D,** they are illustrative embodiments depicting a cross-sectional side view of a structure formed by a frame and a skin. **FIG. 12A** is an illustrative embodiment depicting a cross-sectional side view of a structure formed by a frame and a composite skin. **FIG. 12B** is an illustrative embodiment depicting a cross-sectional side view of a structure including a frame, a composite skin, a metal skin, and a splice plate connecting the metal skin to the composite skin. **FIG. 12C** is an illustrative embodiment depicting a cross-sectional side view of a structure including composite skin connected to a metal skin. **FIG. 12D** is an illustrative embodiment depicting a zoomed in view of a connection of the metal skin to the composite skin on the structure depicted in **FIG. 12C.**

With reference now to **FIG. 12A,** Structure **1202** is shown with frame **1204.** Without limitation, frame **1204** may be a section of a skeletal support for structure **1202.** Without limitation, when structure **1202** may be a wing, skeletal structure may be a wing box, and frame **1204** may be a rib of the wing. A covering may be placed on frame **1204.** The covering on frame **1204** may be composite skin **1206.** Composite skin **1206** may include: a continuous sheet, separate sheets, or may be cocured or bonded sheets that may cover entirety of frame **1204.** Cocured sheets may be sheets that are joined into a single structure during curing. Thus, composite skin **1206** may cover frame **1204** as a monolithic shell. Composite skin **1206** may be connected to frame **1204.** Composite skin **1206** may be bonded to frame **1204.**

Structure **1202** may be referred to as a composite skinned structure. Frame **1204** may have a web **1238.** Web **1238** may have a height **1240.**

Structure **1202** may be a wing. A wing may be a part on an aircraft. Without limitation, the wing may be for an aircraft. Without limitation, frame **1204** may be a part of a wing box for a wing. When structure **1202** is a wing, composite skin **1206** around a leading edge of the wing may be impacted by an object. The object may be without limitation: an object from the ground or an airborne object. Without limitation the object from the ground may be a rock, a piece of a suitcase, or a vehicle. Without limitation the airborne object may be a bird, or a hail stone.

A composite skin **1206** may, if impacted, suffer a damage that requires repair. It may be desirable to have a skin on a structure be able to endure an impact force without requiring repair to the skin, such as without limitation 56.5 Nm (500 inch pounds) from hail. It may be desirable to have a skin on a structure be able to endure an impact force without requiring repair to the skin such as without limitation 135.6 Nm (1200 inch pounds) from a dropped tool on the skin.

Impact forces from a particular object may be larger if the particular object impacts the wing while the wing is in flight than if the wing not in flight. Thus, impact to composite skin **1206** may damage the composite skin **1206.** Damage to composite skin may be without limitation: an indentation, a debond or a crack in or within the composite skin, or a failure or shattering of the composite skin. Thus, to reinforce against potential damage from impact to composite skin **1206** on frame **1204** of structure **1202,** it may be desirable to cover part of frame **1204** with a material that may have a greater resistance to impact damage than the resistance to damage of composite skin **1206.** In an illustrative embodiment, it may be desirable to use metal to cover frame **1204,** or as a part of the skin covering, for a leading edge of a wing.

In general, for any particular material, a thicker skin may provide greater resiliency to absorb an impact without a structural failure and/or a need for repair than a thinner skin of the particular material. However, for any particular material increasing thickness of the skin will increase its weight.

In aircraft applications, reducing a weight of any component will benefit fuel efficiency for the aircraft. Further, reduction in an overall size of a wing may reduce a profile drag component of the wing. Thus, a thinner skin may be desired over a thicker skin to improve aircraft performance and efficiency. For a given thickness, some materials may provide better impact resistance than other materials.

In general, for a skin of a given thickness, a skin made with aluminum may provide better impact resiliency than a composite skin. Without limitation, a fracture toughness value for aluminum may have a fracture toughness value that is approximately 8 times the fracture toughness value of a fiber reinforced composite. Thus, for an equivalent strength that takes into account a relatively equal Young's modulus, a skin made with aluminum as compared to a skin made with a fiber reinforced composite, the skin made with aluminum may be 7 times tougher than the skin made with the fiber reinforce composite. Thus, for a location of a structure that may be prone to receiving an impact, a skin of aluminum may be favored over a skin of composite. However, as noted above, due to galvanic corrosion of aluminum in contact with some composite fibers, aluminum skin may not be a desired component on a structure with skin of fiber reinforced composites.

For a skin of a given thickness, a skin made with titanium may provide better impact resiliency than a skin including aluminum. Without limitation a titanium alloy may have a Young's modulus that may be approximately 1.6 times greater than a Young's modulus for aluminum or a composite. Without limitation a titanium alloy may have a fracture toughness that may be approximately twice a fracture toughness of aluminum or 20 times the fracture toughness of a skin made of a composite. Thus, for an equivalent strength that takes into account Young's modulus, the skin made with titanium may be 1.4 times tougher than the skin made with aluminum or 10 times tougher than the skin made with composites.

With reference now to **FIG. 12B, FIG. 12B** is an illustrative embodiment depicting a cross-sectional side view of a structure including a frame, a composite skin, a metal skin, and a splice plate connecting the metal skin to the composite skin. Structure **1242** may include frame **1244.** Similar to frame **1204** above, without limitation, frame **1244** may be a section of a skeletal support for structure **1242.** Without limitation, when structure **1242** may be a wing, skeletal structure may be a wing box, and frame **1244** may be a rib of the wing. Frame **1244** may be covered by first composite laminate **1208,** second composite laminate **1210,** and metal skin **1212.**

First end **1214** of metal skin **1212** may be connected to end **1218** of first composite laminate **1208,** without any direct connection, via first splice plate **1216.** A distance separating first end **1214** and end **1218** may not be shown to scale in **FIG. 12B.**

Second end **1220** of metal skin **1212** may be connected to end **1224** of second composite laminate **1210,** without any direct connection, via second splice plate **1222.** A distance separating second end **1220** and end **1224** may not be shown to scale in **FIG. 12B.** Although **FIG. 12B** shows metal skin **1212** as being a stack of metal sheets, metal skin 1212 may be a single sheet of metal, such as without limitation a single sheet of aluminum alloy.

Structure **1242** may be referred to as a spliced skin structure. Structure **1242** may have a perimeter that is substantially equal in size and shape to a perimeter of structure **1202,** such that if structure **1202** and structure **1242** were aircraft wings, they may be considered as having the same NACA airfoil designation.

First composite laminate **1208** and/or second composite laminate **1210** may include a carbon fiber. The carbon fiber in first composite laminate **1208** and/or second composite laminate **1210** may include a material that may cause galvanic corrosion of metal skin **1212.** Without limitation, the material may be graphite. When metal skin **1212** is a metal that may act like an anode when in contact with a carbon fiber or graphite, such as without limitation aluminum or aluminum alloys, then to inhibit galvanic corrosion of metal skin **1212,** the graphite may be separated from contacting metal skin **1212.** Currently, separation of metal skin **1212** from a composite component is commonly provided by using splice plates such as splice plate **1216** and splice plate **1222.** Splice plates are commonly made from materials that may not operate as an anode to a carbon fiber or graphite, such as without limitation titanium or titanium alloys. Thus without limitation, in **FIG. 12B,** splice plate **1216** and splice plate **1222** may be made including titanium or a titanium alloy.

Commonly, the space occupied by a splice plate may require an adjacent jog inward of a perimeter of a frame of a structure. Without limitation, as shown in the illustrative embodiment of **FIG. 12B,** top side **1226** of frame **1244** requires jog **1264** to accommodate splice plate **1216** without requiring a fairing and/or an extrusion of a profile of structure **1242** above splice plate **1216.** Similarly, bottom side **1228** of frame **1244** may require jog **1266** to accommodate splice plate **1222** without requiring a fairing and/or an extrusion of a profile of structure **1242** below splice place **1222.** Without limitation, when frame **1244** may be a rib of a wing, top side **1226** may be a flange along a top side of the rib, and bottom side **1228** may be a flange along a bottom side of the rib.

As a result, height **1248** of web **1246** of frame **1244** may not be as great as height **1240** of web **1238** of frame **1204** or as great as height **1256** of web **1254** of frame **1252.** Accordingly, to carry the same load, web **1254** may be thinner than web **1246.** Thus, web **1254** may have less weight than web **1246.** Web **1254** being less weight than web **1246** may contribute to greater performance and/or fuel efficiency for an aircraft containing frame **1252** as compared to the aircraft containing frame **1244.**

First composite laminate **1208** may be joined to second composite laminate **1210** to form a single structure, at a left side of the structure not shown in **FIG. 12B,** or may remain as two distinct laminate sheets. First composite laminate **1208** may be connected to top side **1226** of frame **1244.** Second composite laminate **1210** may be connected to bottom side **1228** of frame **1244.** Without limitation, when frame **1244** may be a rib of a wing, top side **1226** may be a flange along a top side of the rib, and bottom side **1228** may be a flange along a bottom side of the rib.

Each splice plate may require additional hardware, such as without limitation fasteners **1230,** to connect each splice plate to metal skin **1212,** to frame **1244,** and/or to composite laminates. Splice plates and fastening hardware associated with the splice plates may add additional weight, manufacturing time and manpower, and cost to constructing a structure with metal skin **1212** and a composite laminate sheet, as compared to constructing a structure with a skin without splice plates.

Structure **1242** may have web **1246** with height **1248.** Frame **1244** may be similar to frame **1204,** except that frame **1244** may need to be altered to accommodate splice plate **1216** and/or splice plate **1222.** Therefore, when a perimeter of structure **1242** may be substantially equal to the perimeter of structure **1202,** the use of splice plate **1216** and/or splice plate **1222** may require height **1248** to be less than height **1240.** Accordingly, web **1246** may need to be thicker than web **1238.**

With reference now to **FIG. 12C, FIG. 12C** is an illustrative embodiment depicting a cross-sectional side view of a structure including composite skin connected to a metal skin. **FIG. 12C** depicts structure **1250** having frame **1252** covered by first composite laminate **1208,** second composite laminate **1210,** and metal skin **1212.** Similar to frame **1204** above, without limitation, frame **1252** may be a section of a skeletal support for structure **1250.** Without limitation, when structure **1250** may be a wing, skeletal structure may be a wing box, and frame **1252** may be a rib of the wing. First composite laminate **1208** may be considered a first section of a skin on frame **1252.** Second composite laminate **1210** may be considered a second section of a skin on frame **1252.**

Metal skin **1212** may connect to first composite laminate **1208** and to second composite laminate **1210** via respective bonded finger joints as shown in greater detail in **FIG. 12D.** Without limitation, metal skin **1212** may be curved as shown in FIG. 12C. Without limitation, metal skin **1212** may form a leading edge of a structure, such as without limitation a wing for an aircraft. Alternatively, metal skin **1212** may be some other shape, such as without limitation angled or straight.

A first end **1268** of metal skin **1212** may connect directly to first composite laminate **1208** without using any splice plate **1216.** A second end **1270** of metal skin **1212** may connect directly to second composite laminate **1210** without any splice plate **1222.** Thus, metal skin **1212** may connect directly to composite laminates and form a monolithic shell around frame **1252.**

Metal skin **1212** may be made from a metal that does not act as an anode for a material in the composite laminates. Thus, without limitation when metal skin **1212** may include titanium or a titanium alloy, metal skin **1212** may connect directly to first composite laminate **1208** and to second composite laminate **1210** without supporting galvanic corrosion of metal skin **1212.**

Metal skin **1212** may be bonded to first composite laminate **1208** and/or second composite laminate **1210** via an adhesive. Thereby, a wing may be formed with a leading edge including titanium or a titanium alloy that can directly connect to a composite skin on a top side and/or a composite skin on a bottom side of the wing without using a splice plate to connect the leading edge to the respective composite skins. Thus, **FIG. 12C** shows metal skin **1212** may be connected to first composite laminate **1208** and/or second composite laminate **1210** without the using any splice plates, and without any fasteners **1230** connecting metal skin **1212** to first composite laminate **1208** and/or second composite laminate **1210.**

Metal skin **1212** may include inner sheet **1258,** middle sheet **1260,** and outer sheet **1262.** Each metal sheet may be bonded to each adjacent metal sheet. Sheets may be bonded by a layer of adhesive. Thus, there may be a first adhesive layer between inner sheet **1258** and middle sheet **1260,** and a second adhesive layer between middle sheet **1260** and outer sheet **1262.** In some illustrative embodiments, less, or more than (as shown for FIG. 12D below) three metal sheets may be used.

Structure **1250** may be referred to as a Ti-ply skinned structure. Structure **1250** may have a perimeter that is substantially equal in size and shape to the perimeter of structure **1202** and/or the perimeter of structure **1242,** such that if structure **1250,** structure **1202,** and structure **1242** were aircraft wings, they may each be considered as having the same NACA airfoil designation.

Frame **1252** may have a web **1254.** Web **1254** may have a height **1256.** Because the Ti-ply structure shown in **FIG. 12C** may not need any splice plates, height **1256** may be greater than height **1248.** Thus, web **1254** may offer greater strength and load carrying capacity to structure **1250** as compared to structure **1242** by virtue of the greater height **1256** of web **1254** as compared to web **1246.**

Alternatively, if greater strength or load carrying capacity were not needed from web **1254** as compared to web **1246,** then the added height of web **1254,** as compared to web **1246,** may allow web **1254** to be thinner than web **1246.** Thus, frame **1252** may be lighter than frame **1244** and reduce a weight of structure **1250** as compared to structure **1244.** When structures **1242** and **1250** are wings, the reduced weight of web **1254,** as compared to web **1246,** may provide a greater fuel efficiency for structure **1250** as compared to structure **1242.** Thus, a Ti-ply skinned wing, as shown without limitation by **FIG. 12C,** may provide reduced weight and increased fuel efficiency, or greater strength and load carrying capacity, than a splice skinned wing, as shown without limitation by **FIG. 12B.**

Further, in compression after impact testing performed on bonded titanium sheets abutting composite laminate plies and interleaved in a finger joint, as illustrated without limitation in **FIG. 12C** and in greater detail in **FIG. 12D,** a composite laminate side and a metal stack side of the bond tolerated 135.6 Nm (1200 inch pounds) of impact without causing any debond or material failure in the joint or adjoining components. Thus, bonded titanium sheets abutting composite laminate plies and interleaved in a finger joint, as illustrated without limitation in **FIG. 12C** and in greater detail in **FIG. 12D,** provide high operational resilience that may provide an impact tolerant edge for a structure that may be stronger and more resilient than a structure with a substantially equal shape and size that is fully constructed with a composite skin, such as without limitation structure **1202** depicted by **FIG. 12A.**

Also, bonded titanium sheets abutting composite laminate plies and interleaved in a finger joint, as illustrated without limitation in **FIG. 12C** and in greater detail in **FIG. 12D,** may provide high operational resilience that may provide an impact tolerant edge for a structure that may be thinner and/or lighter than a structure with a substantially equal shape and size that may be constructed using a splice plate to separate metal and composite skin components to avoid galvanic corrosion to the metal components, such as without limitation structure **1242** depicted by **FIG. 12B.** Hence, using bonded titanium sheets abutting composite laminate plies and interleaved in a finger joint, as illustrated without limitation in **FIG. 12C** and in greater detail in **FIG. 12D,** may allow construction of a wing that may provide a wing with a leading edge that is more resilient than an alternative wing leading edge such as without limitation a wing with a composite leading edge (such as without limitation **FIG. 12A),** and/or lighter and/or stronger than a wing with a splice plate construction isolating metal from composite components (such as without limitation **FIG. 12B).**

Further, the constructing a structure, such as without limitation structure **1250** with a monolithic shell comprising metal skin 1212 connected to first composite laminate **1208** and second composite laminate **1210** may not only eliminate a need for a use of any splice plates, any fasteners for the splice plates, and/or any other hardware associated with connecting metal skin 1212 to, but also may simplify assembly of attaching a skin to a frame, and eliminate the need for all of the tooling associated with attaching splice plates. Monolithic construction of metal skin 1212 to first composite laminate **1208** and second composite laminate lock **1210** allows for seating a single monolithic component over frame **1252** and attaching the single monolithic component without requiring the tools, alignment, and adjustments required to assemble and seal various skin and splice components to each other, using without limitation lap joints. Thus, the monolithic construction of metal skin 1212 connected to first composite laminate **1208** and second composite laminate **1210** may require less tooling to attach to frame **1252** and provide a smoother and lighter skin on structure **1250** than may be required or produced by the multi-component spliced skin structure such as without limitation structure **1242** described for **FIG. 12B.With** reference now to **FIG. 12D, FIG. 12D** is an illustrative embodiment depicting a zoomed in view of a connection of the metal skin to the composite skin on the structure depicted in **FIG. 12C.** More specifically, **FIG. 12D** shows a zoomed in view of an illustrated embodiment of the connection between metal skin **1212** and second composite laminate **1210.** The connection between metal skin **1212** and second composite laminate **1210** may be a bond. The bond may be formed by an adhesive. The connection shown in **FIG. 12D** between metal skin **1212** and second composite laminate **1210** may be representative of the connection between metal skin **1212** and first composite laminate **1208.** Transition **1236** may be an example of transition section 25 as shown in **Figure 4.**

Metal skin **1212** may be made from stack **1232** of metal sheets, such as metal sheet **1234.** Without limitation, each metal sheet **1234** in stack **1232** may be identical to every other metal sheet **1234** in stack **1232.** Without limitation, each metal sheet **1234** in stack **1232** may share common features with each other metal sheet **1234,** such as without limitation a thickness or a composition. Without limitation, each metal sheet **1234** may be unique from another metal sheet **1234** in stack **1232.**

Without limitation, a quantity of metal sheet **1234** included in stack **1232** may be three. Without limitation, a quantity of metal sheet metal sheet **1234** included in metal sheet **1234** may be other than three. Each metal sheet **1234** in stack **1232** may be bonded to each adjacent metal sheet **1234.**

Without limitation, second composite laminate **1210** may include four plies of composite for each metal sheet **1234** in stack **1232.** Thus, stack **1232** may bond directly to a composite skin without using a splice plate. Each metal sheet **1234** in stack **1232** may be interlaced with composite plies within second composite laminate **1210** in a finger lap joint such that each respective end of each metal sheet **1234** abuts four plies of composite in second composite laminate **1210.**

Joining several metal sheet **1234** together may also provide multiple paths to carry a load. Joining multiple metal sheet **1234** together may lower a value for Young's modulus, as compared to a metal plate of the same thickness as stack **1232** made of multiple metal sheet **1234** bonded together, and prevent a critical defect for the metal skin **1212** section covering structure **1202.** Bonding several metal sheet **1234** together to form a given thickness, may isolate any defect within a particular metal sheet **1234** from propagating beyond the thickness of that particular metal sheet **1234,** and thus help to isolate the defect and/or provide strain relief for the stack **1232** in comparison to a single metal plate of the same thickness as stack **1232.**

Likewise, interleaving staggered ends of the titanium sheets in a finger joint with layers of composite plies, and abutting an end of each metal sheet **1234** with layers of composite plies, as shown in **FIG. 12C** and **12D,** may also lower Young's modulus for the titanium-composite ply joint as compared to a Young's modulus for stack **1232** itself.

In testing, a titanium-composite ply bond transition section **1236** formed with a stack of nine 0.635 mm (0.025 inches) thick sheets of titanium, bonded together with 0.127 mm (0.005 inches) adhesive layers interleaved with composite plies to form a finger joint, and an end of each metal sheet **1234** abutted by 4 composite plies may have a yield point under tensile stress that may be 4.92% greater than a yield point under tensile stress for stack **1232** of titanium sheets. Thus, the bond joint depicted by **FIG. 12D** may have a fracture point stress level that is greater than a fracture point stress level of stack **1232** itself. Thus, if a load were continually increased on stack **1232,** transition section **1236,** and on first composite laminate **1208** and/or second composite laminate **1210** a structural failure may occur in stack **1232** before transition section **1236** of titanium-composite ply bond joint depicted by **FIG. 12D** may experience a structural failure. Thus, a bonded joint, without a using a splice plate, as represented in **FIG. 12D** and **FIG. 12C** may form a stronger joint, one that can withstand a greater load before structural failure, than a joint formed using a splice plate as shown in **FIG. 12B.** A bonded joint, without a using a splice plate, as represented in **FIG. 12D** and **FIG. 12C** may be a thinner joint than one constructed using a splice plate as shown in **FIG. 12C.**

Joining metal skin **1212** to first composite laminate **1208** and/or second composite laminate **1210** by using the bonded joint, formed between metal skin **1212** made of bonded titanium sheets abutting composite laminate plies and interleaved in a finger joint, as illustrated in **FIG. 12C** and in greater detail in FIG. 12D, may form a stronger joint between metal skin **1212** and first composite laminate **1208** and/or second composite laminate **1210** than may be formed by using splice plates as illustrated in **FIG. 12B.** Joining metal skin **1212** to first composite laminate **1208** and/or second composite laminate **1210** by using the bonded joint, formed between metal skin **1212** made of bonded titanium sheets abutting composite laminate plies and interleaved in a finger joint, as illustrated in **FIG. 12C** and in greater detail in **FIG. 12D,** may form a thinner joint as may be formed using composite pad-ups that may without limitation be required to join composite sections, or to strengthen a load carrying capacity for a section of a composite skin, such as without limitation composite skin **1206** in **FIG. 12A,** or first composite laminate **1208** and/or second composite laminate **1210** as shown in **FIG. 12B.**

In testing, a titanium-composite ply bond transition section **1236** formed with a stack of nine 0.635 mm (0.025 inches) thick sheets of titanium, bonded together with 0.127 mm (0.005 inches) adhesive layers interleaved with composite plies to form a finger joint, and an end of each metal sheet **1234** abutted by 4 composite plies may have a yield point under tensile stress that may be 7.3% greater than a yield point under tensile stress for a single titanium plate that may be tapered and bonded with scarfed carbon fiber reinforced composite plies. Thus, the interleaved finger joint formation, without limitation as shown in **FIG. 12D,** may provide a stronger joint than a bonded joint of the similar materials but using a metal plate that may be tapered and bonded with composite plies in a scarfed joint configuration.

Stack **1232,** using an interleaved finger joint configuration with an adhesive layer between each metal sheet **1234** and each metal sheet **1234** abutting four composite plies, may have: a greater number of bond surfaces, more load paths, a shorter joint length, a lower coefficient of thermal expansion induced stresses, a higher modulus, be stronger, have greater durability, and be easier to manufacture, than a bond joint using similar materials except for the metal being a single plate instead of stack **1232** of metal sheets.

Machining and forming stack **1232** using bonded layers of multiple metal sheet **1234** interleaved with and abutted to composite plies, as shown without limitation in **FIG. 12C, FIG. 12D,** may overcome problems of deformation when attempting to form a composite metal joint with a single metal plate. Machining and forming stack **1232** using bonded layers of several metal sheet **1234** interleaved with and abutted to composite plies may overcome problems of residual stresses in the joint and warping during cure when attempting to form a composite metal joint with a single metal plate. Without limitation, when stack **1232** may include a quantity of nine metal sheet **1234** made of titanium, using bonded layers of multiple metal sheet **1234** interleaved with and abutted to composite plies, as shown in **FIG. 12C, FIG. 12D,** instead of forming a bond joint using a single titanium plate tapered bonded into scarfed composite plies, then there may be: 10 bond surfaces instead of 2 bond surfaces, 9 load paths in stack **1232** instead of 1 load path in the single titanium plate, a length of the joint or transition section **1236** may be reduced by one-half, coefficient of thermal expansion induced stresses in the joint may be reduced by one-half, tensile strength may rise by 4.58%, and durability may be increased due to load redistribution among metal sheets and as much as 6% elongation of joint, after yield stress is reached, before failure of the interleaved finger joint.

Some structures may experience changes in temperatures during operation. Without limitation in an illustrative embodiment, an aircraft component, such as without limitation a skin on an aircraft, may experience temperature changes across a range of -54°C (-65°F) to 71°C (160°F) Changes in temperature may induce stresses in the component that may be caused by thermal expansion of the component. Thermal expansion cycles, such as without limitation experienced by an aircraft throughout a flight, may increase structural fatigue of the component. To manage thermal stresses in the component, a thickness of the component may need to be increased. To manage thermal stresses a transition material may be needed to provide a transition coefficient of thermal transition between two other materials with respective coefficients of thermal expansion that may not be compatible with each other. A coefficient of thermal expansion for aluminum may not be compatible with a coefficient of thermal expansion for a composite laminate. Thus, in an illustrative embodiment, splice plate **1216,** as shown in **FIG. 12B,** may be used to provide a coefficient of thermal expansion transition between metal skin **1212** if metal skin **1212** may include aluminum when first composite laminate **1208** may include a carbon fiber reinforced ply.

In order to minimize a needed thickness of a component, and thus minimize a weight of the structure, a material with a favorable coefficient of thermal expansion may be preferred for use in the component. A favorable coefficient of thermal expansion may be a coefficient of thermal expansion with a lower value, or may be a value that is favorably compatible with a coefficient of thermal expansion of an adjacent and/or abutting material.

A favorable coefficient of thermal expansion may also reduce thermal stress fatigue in the component. Thus, joining materials, in a manner or using material that reduces the coefficient of thermal expansion of a joint combining components, may reduce a weight and improve a structural life of each respective component and/or the structure formed by the joined components. In an illustrative embodiment, a titanium-composite ply interleaved finger joint as shown for transition section **1236** in **FIG. 12D,** may have a favorable coefficient of thermal expansion that reduces both weight and fatigue stresses in the joint as compared to the joint shown in **FIG. 12B** using a splice plate.

Reducing coefficient of thermal expansion induced stresses in the joint by one-half may allow the bond joint to experience twice the heating before disbonding as compared to a bond joint using a single tapered metal plate. Thus, a bond joint, as depicted without limitation in **FIG. 12C** and **12D,** may withstand twice the heat before disbonding as compared to a joint formed by a tapered metal sheet bonded to a scarfed composite laminate.

Further, each metal sheet **1234** may have a thickness to length ratio that enables metal sheet **1234** to function as a waveguide for nondestructive testing. Without limitation nondestructive testing may be one-sided nondestructive testing. Without limitation, nondestructive testing may be ultrasonic testing. Because ultrasonic flaw detection may not be able to detect a flaw with a thickness less than one-half of the ultrasonic wavelength, the thickness of each metal sheet **1234** may affect an ability of metal sheet **1234** to function as a waveguide. When the thickness of metal sheet **1234** may be less than one wavelength, guided Lamb wave testing may be required such that the Lamb wave fills the entire cross-section of metal sheet **1234.**

As a width of a material decreases, to detect inconsistencies within the width of the material, an ultrasonic testing wavelength may need to decrease proportionately. To accommodate the smaller wavelength required to detect an inconsistency within material with a layer thinner than approximately 0.635 mm (0.025 inches), a guided wave traveling within material with a layer thinner than approximately 0.635 mm (0.025 inches), such as without limitation metal foil type layers, would need to be transmitted at a higher frequency than for a material a layer of about 0.635 mm (0.025 inches) or more.

Attenuation of a signal in a waveguide is generally proportional to the square of a frequency of the wave (and also a function of material attenuation properties). Hence attempting to transmit ultrasonic waves into thinner sheets of material requires higher frequencies and increases the attenuation of the signal. Thus, at thinner thickness, increased signal attenuation results in reduced lengths of the material that the wave may effectively be used to detect an inconsistency within.

When metal foil layers less than approximately 0.635 mm (0.025 inches) are used effective distance of ultrasonic testing may drop down to as short as 5mm, which becomes impractical for non-destructive testing of wing components.

While increasing energy of the transmitted wavelengths may overcome some attenuation and increase an effective testing range for ultrasonic waves beyond 5mm. A practical working frequency for guided waves may be 150 kHz.

A required voltage required for detection of an inconsistency in a material by a rectangular sensor, where the sensor has no effect on the structure being tested, may be derived from:

$$V = \frac{d_{31}E_{\mathrm{p}}h_{\mathrm{p}}\iint(\epsilon_x + \epsilon_y)\,\mathrm{d}S}{ab(e_{33}(1 - v_{\mathrm{p}}) - 2d_{31}^2 E_{\mathrm{p}})} \qquad\qquad (1)$$

where a, b and h stand for the sensor length, width and thickness, d31 and e33 represent the piezoelectric constants (in m V-1) and the dielectric permittivity at zero stress and Ep and vp denote the piezoceramic Young's modulus and Poisson ratio respectively, and $\epsilon$x and $\epsilon$y represent surface strains in the directions x and y.

Hence, ultrasonic wave testing energy requirements may be inversely proportional to the square of the magnitude of thickness change in the material, and thus it may be impractical and/or too financially burdensome for most operating environments to be able to conduct ultrasonic testing when a sheet thickness drops below 0.635 mm (0.025 inches). Hence, testing indicates that for lengths of material being examined for inconsistencies with ultrasonic waves, in a typical wing of an aircraft, materials of thickness less than approximately 0.635 mm (0.025 inches) do not support guided wave inspection or monitoring. Thus layer thicknesses typical of foil type metal sheets, which can be an order of magnitude less, are simply not functional as a waveguide for non-destructive testing such as without limitation ultrasonic waves.

Still further, bonded titanium sheets abutting composite laminate plies and interleaved in a finger joint, as illustrated without limitation in **FIG. 12C** and in greater detail in **FIG. 12D,** that eliminates a need for any splice plates, may allow for an overall reduction in parts, such as without limitation fasteners, used in construction of the structure. Elimination of parts may simplify the joint between the bonded titanium sheets and abutting composite laminate plies interleaved in a finger joint, and allow for a monolithic design and construction of the structure. Monolithic construction may reduce weight, cost, and production time and/or complexity as compared to a structure that may be formed by connecting metal components to composite components via a splice plate, without limitation as shown in **FIG. 12B.** Monolithic design and construction may provide a more efficient load alignment along structure **1250** than may be available from a spliced construction such as without limitation **FIG. 12B.**

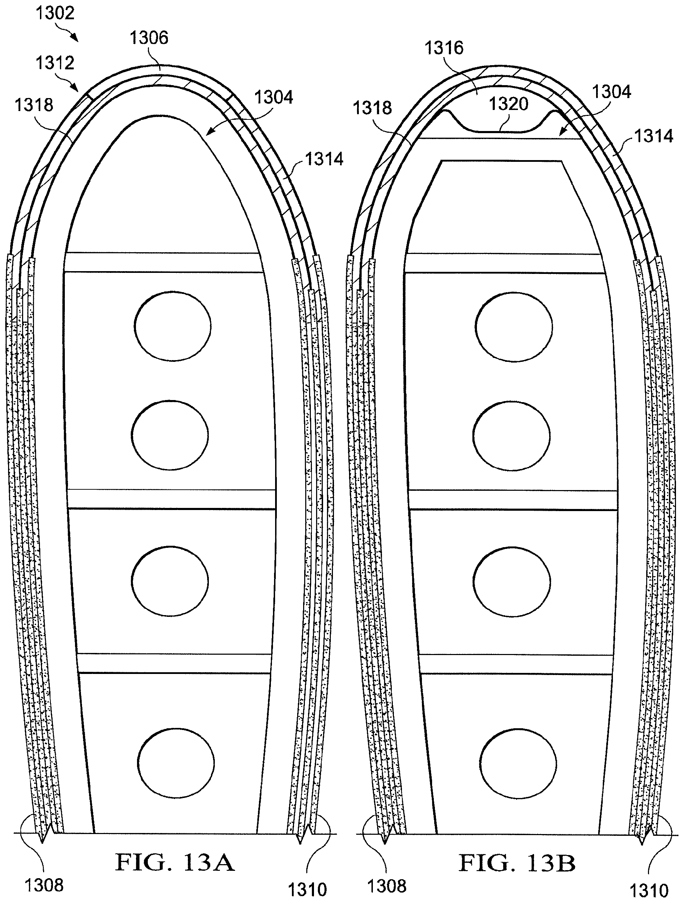

With reference now to **FIG. 13A** and **FIG. 13B, FIG. 13A** is a cross-sectional side view of an illustrated embodiment depicting a structure similar to the structure depicted in **FIG. 12C,** but with conductive strip in a stack of metal sheets. **FIG. 13B** is a cross-sectional side view of an illustrated embodiment depicting a structure similar to the structure depicted in **FIG. 12C,** but with an integrated heating duct. The embodiments illustrated in **FIG. 13A** and **13B** may each facilitate a process for de-icing and/or anti-icing a structure.

More specifically, structure **1302** may include frame **1304** covered by a skin that may incorporate conductive strip **1306,** first composite laminate **1308,** second composite laminate **1310,** and stack **1312.** Without limitation, frame **1304** may be a section of a skeletal support for structure **1302.** Without limitation, when structure **1302** may be a wing, skeletal structure may be a wing box, and frame **1304** may be a rib of the wing. Stack **1312** may include a number of metal sheets. Each metal sheet **1314** may be bonded to each adjacent metal sheet **1314** by a respective adhesive layer. Although two metal sheets, outer metal sheet **1314** and inner metal sheet **1318,** are shown in **FIG. 13A** and **13B** to simplify the illustration, stack **1312** may include different numbers of sheets. Stack **1312** without limitation may include nine or more metal sheets as shown in **FIG. 12D** above. Stack **1312** may incorporate conductive strip **1306.** At least one metal sheet may incorporate conductive strip **1306.**

Conductive strip **1306** is configured to function as a ductless heating element for structure **1302.** Without limitation a ductless heating element may be an element that may be heated by other than providing heated air through a duct. The conductive section may be configured to receive electromagnetic energy. The conductive section may be configured to generate a surface temperature in outer metal sheet **1314** that may be sufficient for preventing adhesion of ice on outer metal sheet **1314.**

Without limitation **FIG. 13A** shows conductive strip **1306** incorporated into outer metal sheet **1314.** Outer metal sheet **1314** may be exposed to moisture. Outer metal sheet **1314** may be in contact with cold air. Conductive strip **1306** may be configured to heat an outer surface of stack **1312.** Conductive strip **1306** may be configured to heat stack **1312.** Conductive strip **1306** may generate enough heat to prevent ice from accumulating on stack **1312** and/or to melt any ice that may accumulate on stack **1312.** Thus, conductive strip **1306** may facilitate stack **1312** functioning as part of a ductless heating element for an anti-icing and/or de-icing process for structure **1302.**

Although conductive strip **1306** is shown in **FIG. 13A** to be in the outer metal sheet **1314,** conductive strip **1306** may be located on any part of any metal sheet that may transfer heat to provide anti-ice and/or de-ice capability to outer metal sheet **1314** for stack **1312.** Conductive strip **1306** may not be integrated into any metal sheet in stack **1312,** but may be configured as an additional strip, that may be connected to any metal sheet in stack **1312** in a manner that may transfer heat to outer metal sheet **1314** and provide anti-ice and/or de-ice capability to stack **1312.** Conductive strip **1306** may located in between any metal sheets in stack **1312** that may transfer heat to outer metal sheet **1314** and provide anti-ice and/or de-ice capability to stack **1312.**

Without limitation stack **1312** may be part of a wing. Without limitation stack **1312** may be part of a leading edge of a wing. Alternatively, without limitation stack **1312** may be a surface plate for a static air source to an air data system for an aircraft, such that the surface plate may be connected to adjacent composite skin on an aircraft structure, such as without limitation a fuselage or an empennage. With reference now to **FIG. 13B, FIG. 13B** is a side cross-sectional view of an illustrated embodiment depicting a structure similar to the structure depicted in **FIG. 12C,** but with an integrated heating duct. Duct **1316** may be formed between inner metal sheet **1318** of stack **1312** and interior sheet **1320.** When duct **1316** is added to structure **1302,** a forward section of frame **1304** may be reshaped to accommodate interior sheet **1320.**

Interior sheet **1320** may be of the same material as inner metal sheet **1318,** and may be formed to bond to inner metal sheet **1318** such that inner metal sheet **1318** bonds to first composite laminate **1308** and/or second composite laminate **1310** as part of an interleaved finger joint between stack **1312** and first composite laminate **1308** and/or second composite laminate **1310** as shown above for **FIG. 12C.** Thus, like inner metal sheet **1318,** interior sheet **1320** may be formed of a material that does not galvanically react with first composite laminate **1308** and/or second composite laminate **1310.**

Alternatively, interior sheet **1320** may be connected to inner metal sheet **1318** at a location on inner metal sheet **1318** before inner metal sheet **1318** contacts first composite laminate **1308** and/or second composite laminate **1310.** Thus, interior sheet **1320** may be made from any material that may avoid a corrosive interaction with inner metal sheet **1318** and may withstand the heated air received in duct **1316** that is sufficient to transfer heat to outer metal sheet **1314** and provide anti-ice and/or de-ice capability to stack **1312.** Thus, interior sheet **1320** may be adapted for: preventing a galvanic interaction with a composite laminate; receiving a flow of air and directing the air such that a heat from the air holds outer metal sheet **1314** at a temperature sufficient for at least one of: preventing adhesion of ice on outer metal sheet **1314,** and melting ice formed on outer metal sheet **1314.**

Although not shown, conductive strip **1306** may be placed on inner metal sheet **1318** and provide heat to air present in duct **1316.** Thus, air received by duct **1316** may not need to be heated before entering duct **1316.** Similarly, conductive strip **1306** may be located in interior sheet **1320.** Likewise some other type of heating element may be present in duct **1316** or connected to interior sheet **1320** to heat air in duct **1316** and provide heat in duct **1316** that may be sufficient to transfer heat to outer metal sheet **1314** and provide anti-ice and/or de-ice capability to stack **1312.**

Further, for either or both **FIG. 13A** and/or **FIG. 13B,** each member of stack **1312,** which may include at least outer metal sheet **1314,** inner metal sheet **1318,** and/or interior sheet **1320,** may have a thickness to length ratio that enables each member of stack **1312** to function as a waveguide for nondestructive testing. Without limitation nondestructive testing may be one-sided nondestructive testing. Without limitation, nondestructive testing may be ultrasonic testing. Because ultrasonic flaw detection may not be able to detect a flaw with a thickness less than one-half of the ultrasonic wavelength, the thickness of each member of stack **1312** may affect an ability of each member of stack **1312** to function as a waveguide. When the thickness of each member of stack **1312** may be less than one wavelength, guided Lamb wave testing may be required such that the Lamb wave fills the entire cross-section of each respective member of stack **1312.**

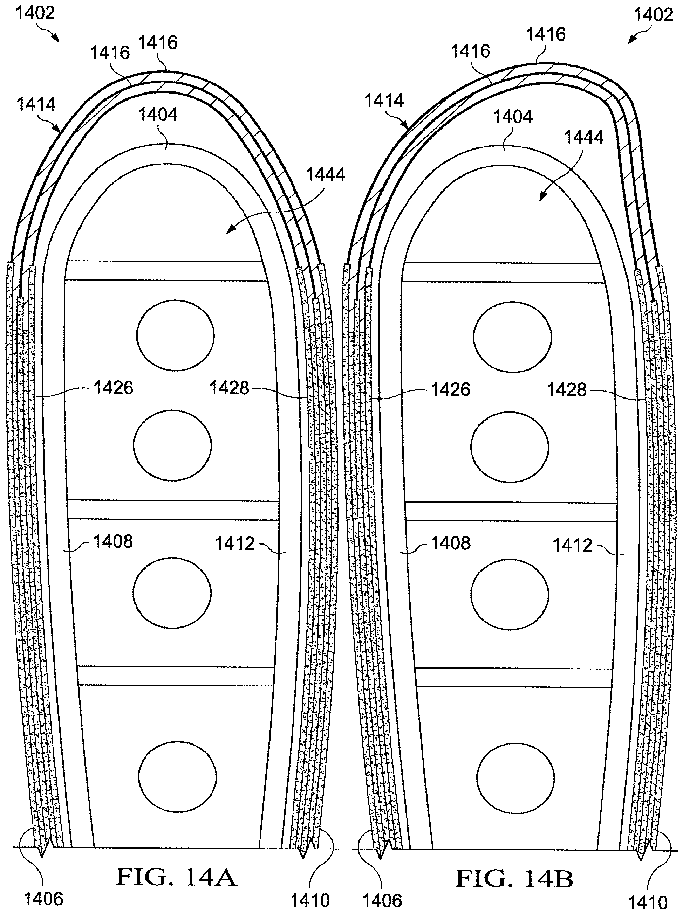

With reference now to **FIG. 14A** and **FIG. 14B, FIG. 14A** is a cross-sectional side view of an illustrative embodiment depicting a structure similar to the structure depicted in **FIG. 12C. FIG. 14B** is a cross-sectional side view of an illustrative embodiment the structure depicted in **FIG. 14A,** but differs from **FIG. 14A** by the stack of metal sheets changing its shape.

**FIG. 14A** depicts structure **1402** with frame **1404** covered with first composite laminate **1406** connected to top side **1408** of frame **1404,** second composite laminate **1410** connected to bottom side **1412** of frame **1404,** and stack **1414** connected to both first composite laminate **1406** and second composite laminate **1410.** Structure **1402** may be an illustrative embodiment of structure **1202** as shown in **FIG. 12C.**

Structure **1402** may be a wing. Without limitation, frame **1404** may be a section of a skeletal support for structure **1402.** Without limitation, when structure **1402** may be a wing, skeletal structure may be a wing box, and frame **1404** may be a rib of the wing. Without limitation, when frame **1404** may be a rib of a wing, top side **1408** may be a flange along a top side of the rib, and bottom side **1412** may be a flange along a bottom side of the rib.

Stack **1414** may be a leading edge of the wing. Stack **1414** may be metal sheets bonded together by an adhesive layer. Each metal sheet **1416** in stack **1414** may be a titanium alloy. Each metal sheet **1416** in stack **1414** may be a shape memory alloy.

**FIG. 14B** depicts structure **1402** after a shape of stack **1414** has changed. A trigger event may cause stack **1414** to change shape. Stack **1414** may be connected to an electrical source. An electrical current may trigger stack **1414** to change shape.

Stack **1414** may be connected to a heat source. A change of temperature of a metal sheet in stack **1414** may trigger stack **1414** to change shape. The trigger event that may cause stack **1414** to change its shape may be without limitation an electrical current or may be an application of heat.

Further, for either or both **FIG. 14A** and/or **FIG. 14B,** each member of stack **1414,** which may include any or all of metal sheet **1416,** may have a thickness to length ratio that enables each member of stack **1414** to function as a waveguide for nondestructive testing. Without limitation nondestructive testing may be one-sided nondestructive testing. Without limitation, nondestructive testing may be ultrasonic testing. Because ultrasonic flaw detection may not be able to detect a flaw with a thickness less than one-half of the ultrasonic wavelength, the thickness of each member of stack **1414** may affect an ability of each member of stack **1414** to function as a waveguide. When the thickness of each member of stack **1414** may be less than one wavelength, guided Lamb wave testing may be required such that the Lamb wave fills the entire cross-section of each respective member of stack **1414.**

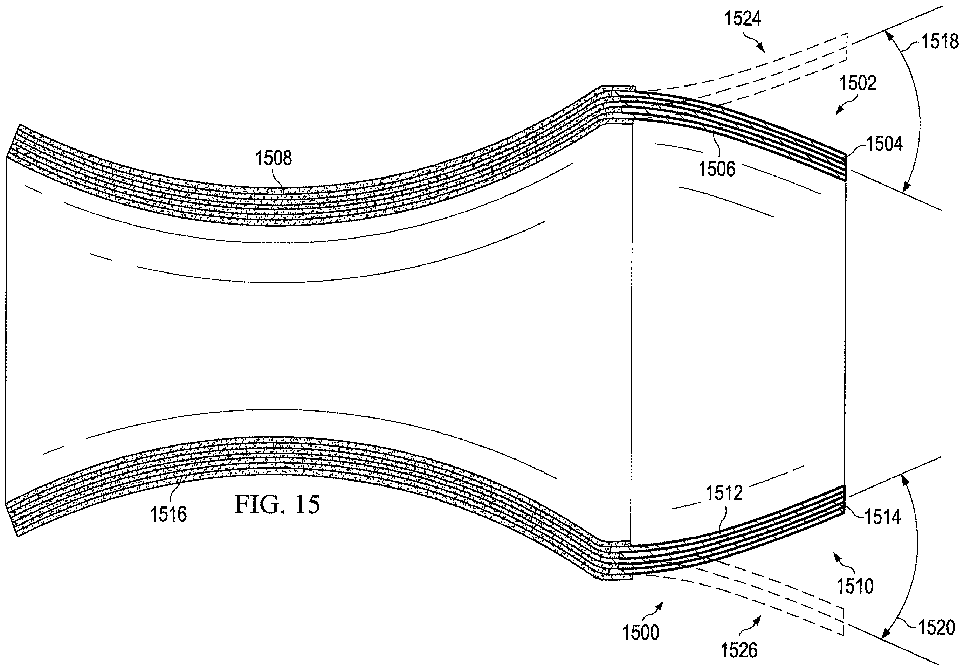

With reference now to **FIG. 15, FIG. 15** is a cross-sectional side view of an engine with a nozzle containing a memory shape alloy connected to a composite engine turbine section cowl in accordance with an illustrative embodiment. More specifically, nozzle **1500** may have segment **1502** including metal sheet **1504** and metal sheet **1506** bonded to composite structure **1508.** Nozzle **1500** may also have a segment **1510** including metal sheet **1512** and metal sheet **1514** bonded to composite structure **1516.**

Each metal sheet may be a shape memory alloy that may change a shape of the respective metal sheet. Each metal sheet may change shape in response to a trigger. Thus, segment **1502** may change shape such that an end of segment **1502** may move to positions indicated along arc **1518,** such as without limitation position **1524.** Similarly, segment **1510** may change shape such that an end of segment **1510** may move to positions indicated along arc **1520,** such as without limitation position **1526.** Thus, nozzle **1500** may change shape to vary its form and performance from a convergent nozzle through a divergent nozzle.

Segment **1502** may form a stack if metal sheet **1504** and metal sheet **1506** are bonded to each other by a layer of adhesive. Segment **1502** may bond to composite structure **1508** in much the same manner as described above for stack **1232** bonding as an interleaved finger joint to second composite laminate **1210** in **FIG. 12B.**

Composite structure **1508** may be bonded to composite structure **1516.** Composite structure **1508** and composite structure **1516** may be different cross sections of a single structure that is connected to segment **1504** and to segment **1510** of nozzle **1500.**

Similar to stack **1414** in **FIG. 14B,** a trigger event may cause segment **1502** and/or segment **1510** to change shape. Segment **1502** and/or segment **1510** may each be connected to an electrical source, and/or to separate electrical sources, and/or connected under separate control to a single electrical source. An electrical current may trigger segment **1502** and/or segment **1510** to change shape.

Segment **1502** and/or segment **1510** may each be connected to a source of heat, and/or to separate heat sources, and/or connected under separate control to a single heat source. A change of temperature may trigger segment **1502** and/or segment **1510** to change shape. The trigger event that may cause segment **1502** and/or segment **1510** to change shape may be without limitation an electrical current or may be an application of heat.

Further, for either or both segment **1502** and/or segment **1510,** each member of stack **1414,** which may include at least one of metal sheet **1504,** metal sheet **1506,** metal sheet **1512,** and/or metal sheet **1514,** may have a thickness to length ratio that enables either or both segment **1502** and/or segment **1510** to function as a waveguide for nondestructive testing. Without limitation nondestructive testing may be one-sided nondestructive testing. Without limitation, nondestructive testing may be ultrasonic testing. Because ultrasonic flaw detection may not be able to detect a flaw with a thickness less than one-half of the ultrasonic wavelength, the thickness of each member of either or both segment **1502** and/or segment **1510** may affect an ability of each respective member of either or both segment **1502** and/or segment **1510** to function as a waveguide. When the thickness of each member of either or both segment **1502** and/or segment **1510** may be less than one wavelength, guided Lamb wave testing may be required such that the Lamb wave fills the entire cross-section of each respective member of either or both segment **1502** and/or segment **1510.**

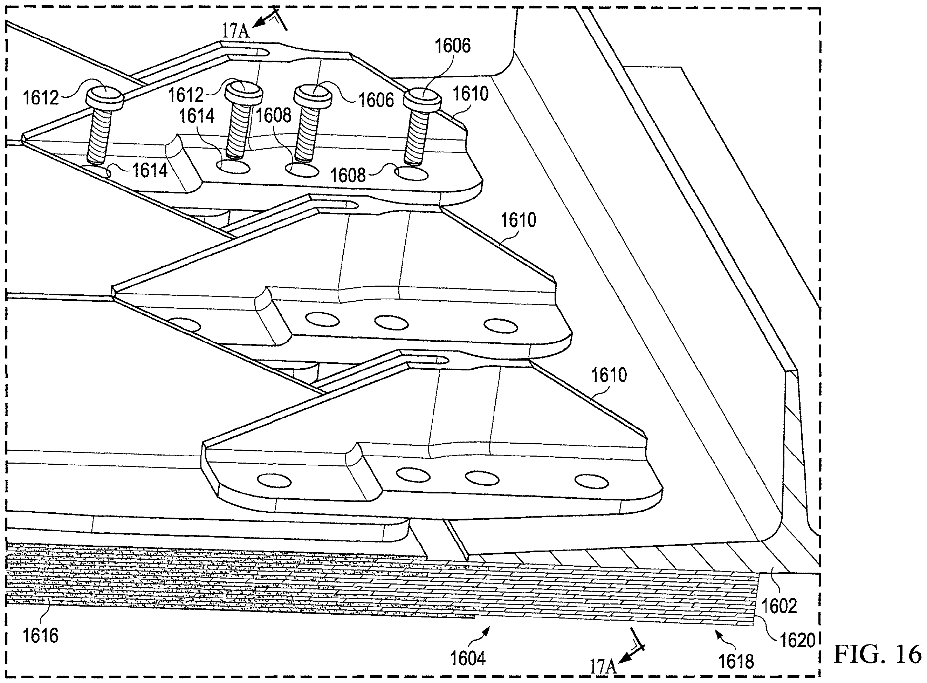

With reference now to **FIG. 16, FIG. 16** is a perspective view of an illustrative embodiment depicting a titanium-composite ply joint connecting an aluminum structure to a composite structure. Aluminum structure **1602** may connect to titanium-composite ply joint **1604** via fasteners **1606** mounted through openings **1608** in brackets **1610.** A quantity of fasteners **1606** and openings **1608** may vary from the quantity shown in **FIG. 16.**

Composite structure **1616** may connect to titanium-composite ply joint **1604** via fasteners **1612** mounted through openings **1614** in brackets **1610.** A quantity of fasteners **1612** and openings **1614** may vary from the quantity shown in **FIG. 16.** For illustrative clarity, fasteners **1606** and fasteners **1612** are only shown for the aft most of brackets **1610.** Brackets **1610** may be made of a material that may not react galvanically with composite structure **1616.** Without limitation, brackets **1610** may be made from titanium, a titanium alloy, or a coated titanium.

Without limitation, fasteners **1606** may be of a different type from fasteners **1612.** Without limitation, fasteners **1606** may be of a different composition than fasteners **1612.**

Titanium-composite ply joint **1604** may form an end section of composite structure **1616.** Without limitation, titanium-composite ply joint **1604** may be formed similar to the description for **FIG. 12D** above. Composite structure **1616** may include a graphite fiber. Composite structure **1616** may be formed such that an end section of composite structure **1616** includes stack **1618.** Stack **1618** may be made of metal sheets bonded together by an adhesive layer between each sheet, such as described without limitation for **FIG. 12C** or **12D** above. Stack **1618** may be titanium sheets. An end of each respective metal sheet in stack **1618** that is opposite, from the end of each respective metal sheet in stack **1618** that is bonded to composite structure **1616** in the interleaved finger joint, may without limitation align with each other to form a single edge **1620** of stack **1618.**

Aluminum structure **1602** may be aligned and connected to stack **1618** such that aluminum structure **1602** may not be in contact with composite structure 1616, but rather contacts stack 1618 portion of titanium-composite ply joint 1604. Thus, aluminum structure 1602 is prevented from contacting composite structure 1616 via stack 1618 being bonded into composite structure 1616 and connecting to aluminum structure 1602.

Although not shown in FIG. 16, aluminum structure 1602 may connect directly to stack 1618 in titanium-composite ply joint 1604 without using brackets 1610. Connection of aluminum structure 1602 to stack 1618 without using brackets **1610** may be made using a connection device, and adhesive, or by another bonding method. The connection device may be similar to fasteners **1606.** When no brackets **1610** are used, fasteners **1612** are not needed. Thus, titanium-composite ply joint **1604** may join aluminum structure **1602** to composite structure **1616** without a carbon fiber in composite structure **1616** contacting aluminum structure **1602.** Thus, titanium-composite ply joint **1604** may join aluminum structure **1602** to composite structure **1616** in a manner that prevents galvanic corrosion of aluminum structure **1602,** and uses fewer fasteners that a method using a splice plate as shown in **FIG. 12B.**

In accordance with an illustrative embodiment, composite structure **1616** in **FIG. 16** may represent a composite wing structure and aluminum structure **1602** may represent a wing mounting structure. Initial testing indicates that that when using titanium-composite ply joint **1604** (Ti-Ply Joint) as compared to previous methods of joining composite structures directly to titanium structures, that aluminum structures, such as without limitation aluminum structure **1602,** can replace a previously required use of titanium for the same function as aluminum structure **1602.** Thus, for a typical wide-bodied aircraft wing root, connecting a composite wing to a wing box, using titanium-composite ply joint **1604** may reduce a weight of the wing root joint by 113,4-158,8Kg (250-350 pounds) as compared to joining the composite wing directly to a titanium structure. Further, machining of the titanium structure to receive and fasten directly to the composite wing may be more difficult and expensive than machining required for aluminum structure **1602** to receive and secure to stack **1618** as shown in **FIG. 16.**

Further, when connecting a composite sheet, such as without limitation composite structure **1616,** directly to a titanium structure serving the function of aluminum structure **1602,** the composite sheet typically required a pad-up, or an increase in thickness of the composite sheet along the length of the connection of the composite sheet to the titanium structure. Additionally, connections of components to stack **1618** provides the benefit of well known load, fatigue, and/or failure characteristics for each metal sheet being used in stack **1618.** Thus, a selection of an alloy composition for stack **1618** as well as a thickness of each metal sheet in stack **1618,** may eliminate a current practice of adding thickness to composite joint components to provide a reinforcement against potentially unpredictable load, fatigue, and/or failure characteristics.

Additionally, stack **1618** may extend without connecting to another structure, such as without limitation aluminum structure **1602,** thus forming a titanium edge for a composite structure, such as without limitation composite structure **1616.** Forming an edge of the composite structure **1616** with stack **1618** of titanium composition via using titanium-composite ply joint **1604,** versus using a continuation of a composite composition forming composite structure **1616** to form the edge, may provide an edge having an impact resistance toughness and/or resiliency at the edge using a thickness of stack **1618** that may be one-half a thickness that would be needed for the same impact resistance toughness and/or resiliency of composite structure **1616** without the titanium edge. Thus, where a opening in a purely composite skinned aircraft, such as without limitation for a door frame, with a 6,35mm (1/4 inch) thick composite skin may require a pad-up that increases a thickness of the composite skin to 12,7mm (1/2 inch) for the edge of the composite skin around the door frame in order to meet a required impact resistance, an edge formed of titanium via using titanium-composite ply joint **1604** may allow for the edge around the door to remain substantially the same 6,35mm (1/4 inch) thickness as the composite skin. A further benefit of using titanium-composite ply joint **1604,** to form an edge for a composite skin or structure, such as without limitation composite structure **1616,** may be eliminating a weight and a manufacturing time and/or tooling, and/or costs, needed to add reinforcement and associated fasteners the edge for attaching a door or hatch to seal an opening that may be formed at the edge.

Further, each member of stack **1618** may have a thickness to length ratio that enables each member of stack **1618** to function as a waveguide for nondestructive testing. Without limitation nondestructive testing may be one-sided nondestructive testing. Without limitation, nondestructive testing may be ultrasonic testing. Because ultrasonic flaw detection may not be able to detect a flaw with a thickness less than one-half of the ultrasonic wavelength, the thickness of each member of stack **1618** may affect an ability of each member of stack **1618** to function as a waveguide. When the thickness of each member of stack **1618** may be less than one wavelength, guided Lamb wave testing may be required such that the Lamb wave fills the entire cross-section of each respective member of stack **1618.**

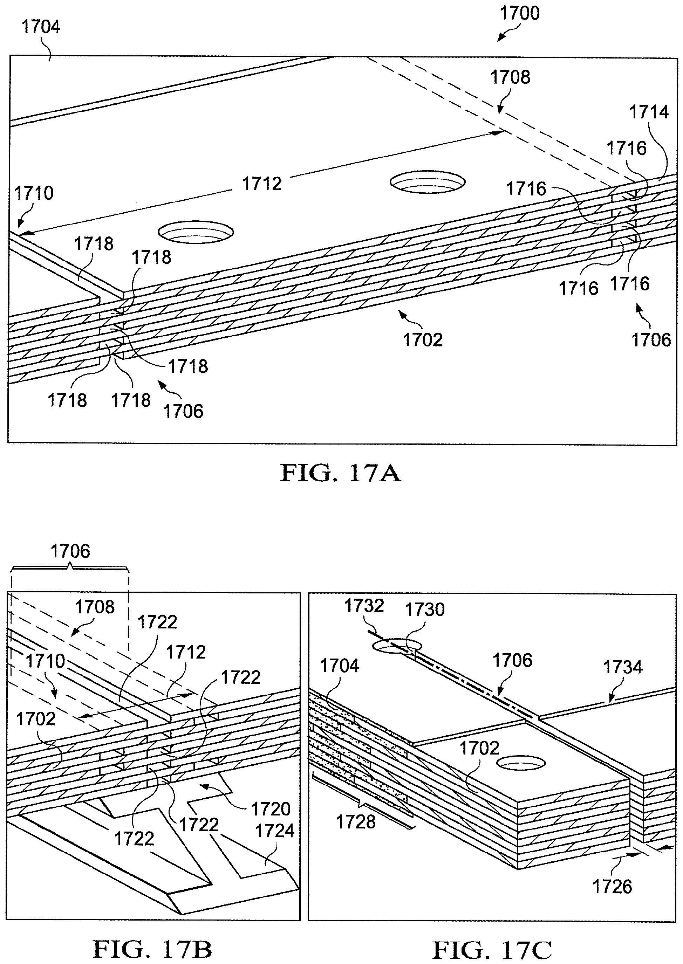

Turning now to **FIG. 17A, 17B,** and **17C.** In **FIG. 17A** an illustration of a perspective cross-section of a titanium-composite ply joint, from view A in **FIG. 16,** of a stack of metal sheets incorporating a Griesson disbond limiter and bonded to a composite laminate is depicted in accordance with an illustrative embodiment. In **FIG. 17B, FIG. 17A** is modified to show an alternative configuration of the Griesson disbond limiter. In **FIG. 17C, FIG. 17B** is modified to show another alternative configuration of the Griesson disbond limiter.

Referring now to **FIG. 17A,** the perspective cross-sectional view of titanium-composite ply joint **1700** may correspond without limitation to view A of titanium-composite ply joint **1604** as shown in **FIG. 16.** Stack **1702** may correspond without limitation to stack **1618** of metal sheets as shown by view A in **FIG. 16.** Composite structure **1704** may without limitation correspond to composite structure **1616** as shown in **FIG. 16.** Griesson disbond limiter **1706** may include a number of segmenters, with each segmenter including a number of gaps in a number of metal sheets in stack **1702** of metal sheets.

A value of effectiveness of disbond limiting provided by Griesson disbond limiter **1706** may be measured by a rise in a value of a load required to propagate a disbond among the sheets comprising titanium-composite ply joint **1700.** Testing has shown that Griesson disbond limiter **1706** may raise the value of the load required to propagate the disbond in a bond such as bonds in titanium-composite ply joint **1700** by as much as 57%. An amount of disbond limitation provided by Griesson disbond limiter **1706** may be determined by distance **1712** between first segmenter **1708** and second segmenter **1710,** a width of first segmenter **1708,** a width of second segmenter **1710,** and/or by the number of and relationship between portions removed from each metal sheet within stack **1702.** Each segmenter of Griesson disbond limiter **1706** may be an expansion joint formed into stack **1702** and/or **1704.** The expansion joint, or segmenter, may without limitation be formed into stack **1702** without extending into composite structure **1704.** Without limitation the expansion joint, or segmenter, may extend through stack **1702** and into composite layers of composite structure **1704.**

As shown without limitation in **FIG. 17A,** segmenters forming Griesson disbond limiter **1706,** such as first segmenter **1708** and second segmenter **1710,** may without limitation be oriented substantially perpendicular to an edge of composite structure **1704,** such as edge **1734** shown in **FIG. 17C.**

First segmenter **1708** and/or second segmenter **1710** may be formed by removing some portion of at least one metal sheet in stack **1702.** As shown in **FIG. 17A,** after leaving upper metal sheet **1714** intact, gap **1716** has been cut into every other metal sheet in first segmenter **1708,** while in second segmenter **1710** gap **1718** has been cut into each metal sheet that does not have a gap in first segmenter **1708,** including upper metal sheet **1714.**

With reference to **FIG. 17B, FIG. 17B** modifies **FIG. 17A** to show an alternative configuration of the Griesson disbond limiter. In **FIG. 17B,** Griesson disbond limiter **1706** distance **1712** between first segmenter **1708** and second segmenter **1710** differs from distance **1712** of **FIG. 17A** by being smaller, such that first segmenter **1708** is closer to second segmenter **1710** than as shown in **FIG. 17A.** Griesson disbond limiter **1706** of **FIG. 17B** also differ from Griesson disbond limiter **1706** of **FIG. 17A** by gap **1716** only being present in two metal sheets for first segmenter **1708** and gap **1718** only being present in two metal sheets in second segmenter **1710** that are not the same metal sheets that have gaps in first segmenter. Griesson disbond limiter **1706** in **FIG. 17B** also differs from Griesson disbond limiter **1706** of **FIG. 17A** by adding third segmenter **1720.** Third segmenter **1720** may have gap **1722** present in each metal sheet that does not have any gap in first segmenter **1708** and second segmenter **1710.** Further, third segmenter **1720** may be centered over a rib **1724** of a structure, such as without limitation web **1254** of structure **1250** as shown in **FIG. 12C.**

With reference to **FIG. 17C,** in **FIG. 17C, FIG. 17B** is modified to show another alternative configuration of Griesson disbond limiter **1706.** In **FIG. 17C,** Griesson disbond limiter **1706** may include only first segmenter **1708** with gap **1726** being cut into every metal sheet in stack **1702.** Further, gap **1726** may extend through transition section **1728** of **1700** into composite structure **1704** and terminate in by transitioning into opening **1730.**

Combinations of configurations shown in Figures **17A-17C** may also be applied, such that without limitation stack **1702** may include some of gap **1716,** gap **1718,** and/or gap **1722,** while transition section **1728** and composite structure **1704** may include gap **1726** that extends through a full thickness of stack **1702** and through a full thickness of composite structure **1704,** and may transition to include opening **1730.** Limitations to disbonding of sheets within stack **1702** of metal sheets, and/or of metal sheets to composite structure, and/or of laminate sheets within composite structure may be altered by varying a quantity and relative positioning of gaps within stack **1702.** In other words, Griesson disbond limiter **1706** may include configurations of various segmenters and gaps that may be variations on those presented in **FIG. 17A-C.**

Longitudinal axis **1732** of first segmenter **1708** and gap **1726** may be oriented at a normal angle to edge **1734** of composite structure **1704,** as shown without limitation in **FIG. 17C.** Limitations to disbonding of sheets within stack **1702** of metal sheets, and/or of metal sheets to composite structure, and/or of laminate sheets within composite structure may be altered by varying an angle of each segmenter relative to the edge of the composite structure. Longitudinal axis **1732** of first segmenter **1708** and gap **1726** may be oriented at an angle that may be at an angle other than normal to edge **1734,** such as without limitation 15, 30, or 45 degrees to edge **1734** of composite structure 1704. Opening **1730** may extend through composite structure **1704.** Composite structure **1704** may have a circular shape. Composite structure **1704** may have another shape such as without limitation at least one of: an oval, an elongated oval, an "L" shape, and a flanged tee.

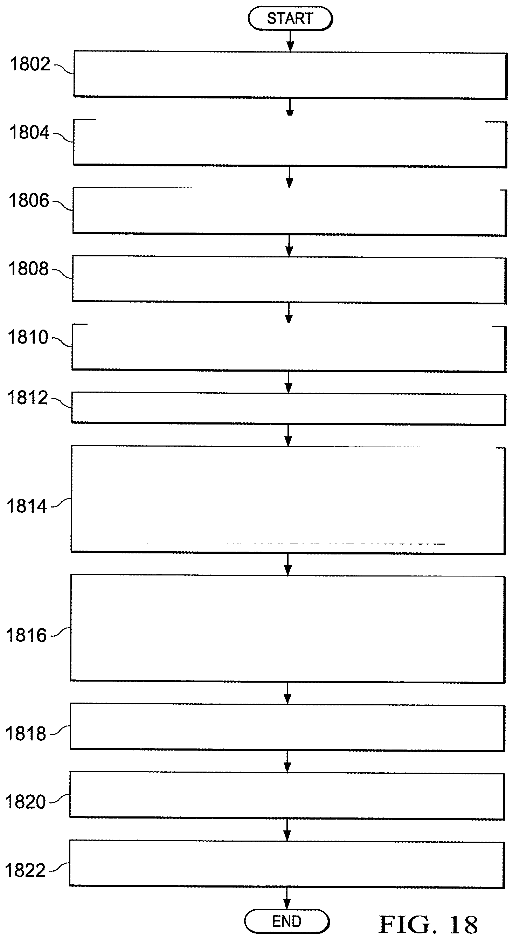

With reference to **FIG. 18, FIG. 18** is a flowchart of a process for bonding a metal skin to a composite skin without using a splice plate depicted in accordance with an illustrative embodiment. Process **1800** may include steps **1802-1822.** Process **1800** may begin by integrating a conductive section into a first metal sheet (Operation **1802**). The conductive section may be a part of a system to prevent accumulation and/or remove accumulation of ice on the metal skin. The conductive section may be configured to receive electromagnetic energy.

Process **1800** may include bonding the first metal sheet to a second metal sheet via an adhesive layer to form a stack (Operation **1804**). The stack may include an inner sheet, a middle sheet, and an outer sheet. Thus, there may be a first adhesive layer between the inner sheet and the middle sheet, and a second adhesive layer between middle sheet and the outer sheet. Each sheet may include titanium. Each metal sheet in the stack may have a length that differs from an adjoining metal sheet. Each metal sheet may have a thickness that allows the sheet to function as a waveguide for non-destructive testing (e.g. one-sided non-destructive testing). Process **1800** may include interlacing each sheet in the stack with plies of a respective composite laminate in a finger lap joint (Operation **1806**). Each respective end of the metal sheet may respectively abut four plies of the respective composite laminate. Each composite laminate may include a fiber. The fiber reinforcing any composite laminate may include graphite.

Process **1800** may include bonding a first composite laminate to a first end of the stack without using a splice plate (Operation **1808**). Process **1800** may include bonding a second composite laminate to a second end of the stack without using a splice plate (Operation **1810**). Process **1800** may include forming the stack to a shape. (Operation **1812**). The shape may be a curve. The shape may form a leading edge for a structure, such as without limitation a leading edge for a wing.

Process **1800** may include increasing a load carrying capacity of the structure via increasing a height of a rib of a frame of the structure relative to a height of a rib of a splice skinned structure with a substantially equal size and shape as the structure (Operation **1814**). Process **1800** may include decreasing a weight of the structure via decreasing a width of the rib of the frame of the structure relative to a width of the rib of the splice skinned structure with a substantially equal size and shape as the structure (Operation **1816**).

Process **1800** may also include connecting the first composite laminate to a top side of the frame of the structure (Operation **1818**). Process **1800** may include connecting the second composite laminate to a bottom side of the frame of the structure (Operation **1820**). Process **1800** may include integrating an interior sheet onto an inner sheet of the stack to form a duct. (Operation **1822**)

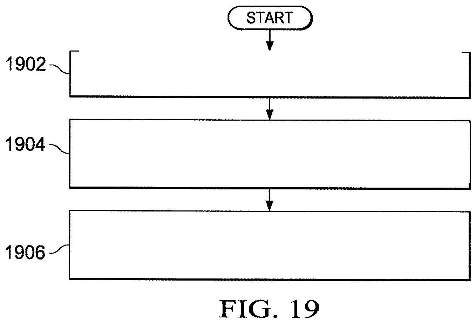

With reference to **FIG. 19,** a flowchart of a process for inhibiting galvanic corrosion of an aluminum structure connected, without using a splice plate, to a composite structure is depicted in accordance with an illustrative embodiment. Process **1900** may include steps **1902-1906.** Process **1900** may begin by bonding a first metal sheet to a second metal sheet via an adhesive layer to form a stack (Operation **1902**). Process **1900** may include bonding the composite structure to a first end of a stack of metal sheets in a fingered lap joint, without using the splice plate (Operation **1904**). Process **1900** may include connecting the stack to the aluminum structure such that the aluminum structure does not contact the composite structure (Operation **1906**).

The flowcharts and block diagrams in the different depicted embodiments illustrate the architecture, functionality, and operation of some possible implementations of apparatuses and methods in an illustrative embodiment. In this regard, each block in the flowcharts or block diagrams may represent a module, a segment, a function, and/or a portion of an operation or step.

In some alternative implementations of an illustrative embodiment, the function or functions noted in the blocks may occur out of the order noted in the figures. For example, in some cases, two blocks shown in succession may be executed substantially concurrently, or the blocks may sometimes be performed in the reverse order, depending upon the functionality involved. Also, other blocks may be added in addition to the illustrated blocks in a flowchart or block diagram.

The description of the different illustrative embodiments has been presented for purposes of illustration and description, and is not intended to be exhaustive or limited to the embodiments in the form disclosed. Many modifications and variations will be apparent to those of ordinary skill in the art. Further, different illustrative embodiments may provide different features as compared to other desirable embodiments. The embodiment or embodiments selected are chosen and described in order to best explain the principles of the embodiments, the practical application, and to enable others of ordinary skill in the art to understand the disclosure for various embodiments with various modifications as are suited to the particular use contemplated.

## Claims

1. A process for bonding a metal skin, without using a splice plate, to a composite skin, the composite skin comprising a first composite laminate and a second composite laminate, each composite laminate comprising a respective fiber comprising graphite; the process comprising:

   bonding the first composite laminate (1208) to a first end of a stack (1212), the stack comprising metal sheets (1234), and bonding the second composite laminate (1210) to a second end of the stack (1212);
   forming the stack (1212) to a shape;
   connecting the first composite laminate (1208) to a top side of a frame (1252) of a structure; and
   connecting the second composite laminate (1210) to a bottom side of the frame (1252) of the structure;
   wherein each metal sheet has a thickness of about 0.635 mm (0.025 inches) forming a waveguide for one-sided non-destructive testing.

2. The process of claim 1, further comprising each metal sheet (1234) bonding to an adjacent metal sheet via an adhesive layer.

3. The process of any preceding claim, wherein bonding further comprises:
   interlacing each sheet in the stack with plies of at least one of:
   the first composite laminate (1208), and the second composite laminate (1212), in a finger lap joint such that each respective end of each metal sheet in the stack abuts four plies of the respective composite laminate.

4. The process of any preceding claim, wherein the stack comprises bonding an inner sheet (1258), a middle sheet (1260), and an outer sheet (1262), each sheet comprising titanium, together via: a first adhesive layer between the inner sheet and the middle sheet, and a second adhesive layer between the middle sheet and the outer sheet.

5. The process of any preceding claim, further comprising the stack (1212) comprising an outer sheet and an anti-icing process selected from at least one of:

   integrating a conductive section comprising a ductless heating element (1306) into at least one metal sheet in the stack, providing electromagnetic energy to the conductive section, the conductive section receiving electromagnetic energy and generating a surface temperature in the outer sheet, the surface temperature being sufficient for at least one of: preventing adhesion of ice on the outer sheet, and melting ice formed on the outer sheet; and
   integrating a duct (1316) to the stack via an interior sheet to an inner sheet of the stack, the interior sheet preventing galvanic interaction with the composite laminate; receiving a flow of air; and directing the air such that a heat from the air holds the outer sheet of the stack at a temperature sufficient for at least one of: preventing adhesion of ice on the outer sheet, and melting ice formed on the outer sheet.

6. The process of any preceding claim, further comprising: the first composite laminate, the stack, and the second composite laminate, forming a monolithic shell.

7. The process of any preceding claim, further comprising increasing a load carrying capacity of the structure, relative to a splice skinned structure, by increasing a height of a web in the frame, relative to a height of a web in a frame of the splice skinned structure.

8. An apparatus configured as a structure comprising a skin, the skin comprising:

a stack (1212) comprising metal sheets (1234);
a first section comprising a first composite laminate (1208), the first composite laminate (1208) connected to a top side of a frame of the structure, and bonded without a splice plate, to a first end of the stack (1212);

a second section comprising a second composite laminate (1210), the second composite laminate (1210) connected to a bottom side of the frame, and bonded to a second end of the stack (1212); and
each metal sheet in the stack is about 0.635 mm (0.025 inches) thick forming a waveguide for one-sided non-destructive testing, and bonded to an adjacent metal sheet by a layer of adhesive.

9. The apparatus of claim 8, further comprising the first section, the stack, and the second section, forming a monolithic shell for the structure.

10. The apparatus of claim 8 or 9, further comprising a bond at each end of the stack configured as a finger lap joint, wherein each finger lap joint comprises four plies of composite laminate abutting each metal sheet in the stack.

11. The apparatus of any of claims 8 to 10, further comprising the stack comprising a shape memory alloy that changes, in response to a trigger, a shape of an edge of the structure.

**Patentansprüche**

1. Verfahren zum Verbinden einer Metallhaut, ohne Verwendung einer Spleißplatte, mit einer Verbundstoffhaut, wobei die Verbundstoffhaut ein erstes Verbundlaminat und ein zweites Verbundlaminat umfasst, wobei jedes Verbundlaminat eine entsprechende Faser aufweist, die Graphit umfasst; wobei das Verfahren umfasst:

Verbinden des ersten Verbundlaminats (1208) mit einem ersten Ende eines Stapels (1212), wobei der Stapel Metallbleche (1234) umfasst, und Verbinden des zweiten Verbundlaminats (1210) mit einem zweiten Ende des Stapels (1212);
Formen des Stapels (1212) zu einer Form;
Verbinden des ersten Verbundlaminats (1208) mit einer Oberseite eines Rahmens (1252) einer Struktur; und Verbindung des zweiten Verbundlaminats (1210) mit einer Unterseite des Rahmens (1252) der Struktur; wobei jedes Metallblech eine Dicke von etwa 0,635 mm (0,025 Inch) aufweist und einen Wellenleiter für einseitige zerstörungsfreie Prüfungen bildet.

2. Verfahren nach Anspruch 1, wobei ferner jedes Metallblech (1234) mit einem benachbarten Metallblech über eine Klebstoffschicht verbunden wird.

3. Verfahren nach einem der vorhergehenden Ansprüche, wobei das Verbinden ferner aufweist:
Verflechtung jedes Blechs im Stapel mit Lagen von mindestens einer der folgenden:
das erste Verbundlaminat (1208) und das zweite Verbundlaminat (1212) in einer Finger-Überlappungsverbindung, so dass jedes jeweilige Ende jedes Metallblechs in dem Stapel an vier Lagen des jeweiligen Verbundlaminats anstößt.

4. Verfahren nach einem der vorhergehenden Ansprüche, wobei der Stapel das Verbinden eines inneren Blechs (1258), eines mittleren Blechs (1260) und eines äußeren Blechs (1262) aufweist, wobei jedes Blech Titan enthält, und zwar über: eine erste Klebstoffschicht zwischen der inneren Folie und der mittleren Folie und eine zweite Klebstoffschicht zwischen der mittleren Folie und der äußeren Folie.

5. Verfahren nach einem der vorhergehenden Ansprüche, das ferner den Stapel (1212) aufweist, der ein äußeres Blech und ein Vereisungsschutzverfahren umfasst, das aus mindestens einem von diesen ausgewählt wird:

Integrieren eines leitfähigen Abschnitts, der ein leitungsloses Heizelement (1306) umfasst, in mindestens ein Metallblech in dem Stapel, Bereitstellen elektromagnetischer Energie für den leitfähigen Abschnitt, wobei der leitfähige Abschnitt elektromagnetische Energie empfängt und eine Oberflächentemperatur in dem äußeren Blech erzeugt, wobei die Oberflächentemperatur ausreicht, um mindestens eines der folgenden zu erreichen: Verhindern des Anhaftens von Eis auf dem äußeren Blech und Schmelzen von auf dem äußeren Blech gebildetem Eis; und

das Integrieren eines Kanals (1316) in den Stapel über eine innere Platte zu einer inneren Platte des Stapels, wobei die innere Platte eine galvanische Wechselwirkung mit dem Verbundlaminat verhindert; das Aufnehmen eines Luftstroms; und das Lenken der Luft derart, dass eine Wärme aus der Luft die äußere Platte des Stapels auf einer Temperatur hält, die ausreicht, um mindestens eines der folgenden zu erreichen: das Verhindern des Anhaftens von Eis an der äußeren Platte und das Schmelzen von auf der äußeren Platte gebildetem Eis.

6. Verfahren nach einem der vorhergehenden Ansprüche, das ferner folgendes umfasst: das erste Verbundlaminat, der Stapel und das zweite Verbundlaminat bilden eine monolithische Schale.

7. Verfahren nach einem der vorhergehenden Ansprüche, das ferner umfasst:
Erhöhen der Tragfähigkeit der Struktur im Verhältnis zu einer gespleißten Haut-Struktur durch Vergrößerung der Höhe eines Stegs in dem Rahmen im Verhältnis zu einer Höhe eines Stegs in einem Rahmen der gespleißten Haut-Struktur.

8. Vorrichtung, die als eine Struktur konfiguriert ist, die eine Haut umfasst, wobei die Haut aufweist:

einen Stapel (1212) aus Metallblechen (1234);
einen ersten Abschnitt mit einem ersten Verbundlaminat (1208), wobei das erste Verbundlaminat (1208) mit einer Oberseite eines Rahmens der Struktur verbunden ist und ohne eine Spleißplatte mit einem ersten Ende des Stapels (1212) verbunden ist;
einen zweiten Abschnitt mit einem zweiten Verbundlaminat (1210), wobei das zweite Verbundlaminat (1210) mit einer Unterseite des Rahmens verbunden ist und mit einem zweiten Ende des Stapels (1212) verklebt ist; und jedes Metallblech im Stapel ist etwa 0,635 mm (0,025 Zoll) dick und bildet einen Wellenleiter für die einseitige zerstörungsfreie Prüfung, wobei jedes Metallblech mit einem benachbarten Metallblech durch eine Klebstoffschicht verbunden ist.

9. Vorrichtung nach Anspruch 8, die ferner den ersten Abschnitt, den Stapel, und den zweiten Abschnitt umfasst, die eine monolithische Schale für die Struktur bilden.

10. Vorrichtung nach Anspruch 8 oder 9, die ferner eine Verbindung an jedem Ende des Stapels aufweist, die als Finger-Überlappungsverbindung konfiguriert ist, wobei jede Finger-Überlappungsverbindung vier Lagen eines Verbundlaminats aufweist, die an jedes Metallblech in dem Stapel anstoßen.

11. Vorrichtung nach einem der Ansprüche 8 bis 10, die ferner den Stapel aus einer Formgedächtnislegierung umfasst, die als Reaktion auf einen Auslöser die Form einer Kante der Struktur ändert.

**Revendications**

1. Procédé destiné à assembler, sans utiliser d'éclisse, un revêtement métallique à un revêtement composite, le revêtement composite comprenant un premier stratifié composite et un deuxième stratifié composite, chaque stratifié composite comprenant une fibre respective comprenant du graphite ; le procédé comprenant :

l'assemblage du premier stratifié composite (1208) à une première extrémité d'un empilement (1212), l'empilement comprenant des tôles métalliques (1234), et l'assemblage du deuxième stratifié composite (1210) à une deuxième extrémité de l'empilement (1212) ;
le façonnage de l'empilement (1212) en une forme ;
le raccordement du premier stratifié composite (1208) à un côté supérieur d'un cadre (1252) d'une structure ; et
le raccordement du deuxième stratifié composite (1210) à un côté inférieur du cadre (1252) de la structure ;
dans lequel chaque tôle métallique a une épaisseur d'environ 0,635 mm (0,025 pouce) formant un guide d'ondes pour un contrôle non destructif d'un seul côté.

2. Procédé de la revendication 1, comprenant en outre l'assemblage de chaque tôle métallique (1234) à une tôle métallique adjacente par le biais d'une couche adhésive.

**3.** Procédé d'une quelconque revendication précédente, dans lequel l'assemblage comprend en outre :
l'entrelacement de chaque tôle dans l'empilement avec des couches d'au moins un élément parmi :
le premier stratifié composite (1208) et le deuxième stratifié composite (1212), dans un joint à recouvrements multiples de telle sorte que chaque extrémité respective de chaque tôle métallique dans l'empilement jouxte quatre couches du stratifié composite respectif.

**4.** Procédé d'une quelconque revendication précédente, dans lequel l'empilement comprend l'assemblage d'une tôle interne (1258), d'une tôle centrale (1260) et d'une tôle externe (1262), chaque tôle comprenant du titane, par le biais : d'une première couche adhésive entre la tôle interne et la tôle centrale, et d'une deuxième couche adhésive entre la tôle centrale et la tôle externe.

**5.** Procédé d'une quelconque revendication précédente, comprenant en outre le fait que l'empilement (1212) comprend une tôle externe, et un procédé antigivrage choisi parmi au moins une des opérations suivantes :

l'intégration d'une section conductrice comprenant un élément chauffant sans conduit (1306) à l'intérieur d'au moins une tôle métallique dans l'empilement, la fourniture d'énergie électromagnétique à la section conductrice, la section conductrice recevant de l'énergie électromagnétique et générant une température de surface dans la tôle externe, la température de surface étant suffisante pour au moins une des actions suivantes : empêcher l'adhérence de glace sur la tôle externe, et faire fondre la glace formée sur la tôle externe ; et
l'intégration d'un conduit (1316) à l'empilement par le biais d'une tôle intérieure jusqu'à une tôle interne de l'empilement, la tôle intérieure empêchant une interaction galvanique avec le stratifié composite ; la réception d'un courant d'air ; et le guidage de l'air de telle sorte qu'une chaleur issue de l'air maintienne la tôle externe de l'empilement à une température suffisante pour au moins une des actions suivantes : empêcher l'adhérence de glace sur la tôle externe, et faire fondre la glace formée sur la tôle l'externe.

**6.** Procédé d'une quelconque revendication précédente, comprenant en outre : la formation, par le premier stratifié composite, l'empilement et le deuxième stratifié composite, d'une coque monolithique.

**7.** Procédé d'une quelconque revendication précédente, comprenant en outre l'augmentation d'une capacité de charge de la structure, par rapport à une structure à revêtement avec éclisse, par augmentation d'une hauteur d'une âme dans le cadre, par rapport à une hauteur d'une âme dans un cadre de la structure à revêtement avec éclisse.

**8.** Appareil configuré comme une structure comprenant un revêtement, le revêtement comprenant :

un empilement (1212) comprenant des tôles métalliques (1234) ;
une première section comprenant un premier stratifié composite (1208), le premier stratifié composite (1208) étant raccordé à un côté supérieur d'un cadre de la structure, et assemblé sans éclisse à une première extrémité de l'empilement (1212) ;
une deuxième section comprenant un deuxième stratifié composite (1210), le deuxième stratifié composite (1210) étant raccordé à un côté inférieur du cadre, et assemblé à une deuxième extrémité de l'empilement (1212) ; et
chaque tôle métallique dans l'empilement fait environ 0,635 mm (0,025 pouce) d'épaisseur, formant un guide d'ondes pour un contrôle non destructif d'un seul côté, et est assemblée à une tôle métallique adjacente par une couche d'adhésif.

**9.** Appareil de la revendication 8, comprenant en outre le fait que la première section, l'empilement et la deuxième section forment une coque monolithique pour la structure.

**10.** Appareil de la revendication 8 ou 9, comprenant en outre un assemblage à chaque extrémité de l'empilement configuré comme un joint à recouvrements multiples, chaque joint à recouvrements multiples comprenant quatre couches de stratifié composite jouxtant chaque tôle métallique dans l'empilement.

**11.** Appareil de l'une quelconque des revendications 8 à 10, comprenant en outre le fait que l'empilement comprend un alliage à mémoire de forme qui modifie, en réponse à un déclencheur, une forme d'un bord de la structure.

FIG. 1

FIG. 2

FIG. 3

FIG. 4

FIG. 5

FIG. 6

65

FIG. 7

FIG. 8

FIG. 9

60

64 ~ | ~~SPECIFICATION AND DESIGN~~ |

66 ~ | |

68 ~ | |

70 ~ | |

72 ~ | |

74 ~ | |

76 ~ | |

## FIG. 10

62

AIRCRAFT

78 ~ | AIRFRAME |     | INTERIOR | ~ 82

SYSTEMS

| PROPULSION |     | ELECTRICAL |

84   88         86   90

| HYDRAULIC |     | ENVIRONMENTAL |

~ 80

## FIG. 11

**FIG. 12A**

1202

1240
1238

1204

1204

1206
1204

**FIG. 12B**

1226  1208

1230  1218 1214
1212 1242

1246
1216
1264

1248
1266

1204

1228  1210

1222  1220
1230
1244

**FIG. 12C**

1208

1224  1212 1250

1254
1268

1256  1270

1210

1258 1260 1262
1252

FIG. 12D

1232
1234
1234
1234

1210  1236  1212

**FIG. 12D**

FIG. 13A

FIG. 13B

1402

1416  1416

1414

1404

1444

1426          1428

1408          1412

1406                    1410

FIG. 14A

1402

1416  1416

1414

1404

1444

1426          1428

1408          1412

1406                    1410

FIG. 14B

FIG. 15

FIG. 16

FIG. 17A

FIG. 17B

FIG. 17C

START

1802

1804

1806

1808

1810

1812

1814

1816

1818

1820

1822

END

FIG. 18

FIG. 19

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- GB 724758 A

- WO 2005087589 A1